(19)

Europäisches
Patentamt
European
Patent Office
Office européen
des brevets

(11) **EP 2 940 625 A2**

(12) **EUROPEAN PATENT APPLICATION**

(43) Date of publication:
04.11.2015 Bulletin 2015/45

(51) Int Cl.:
**G06K 9/00** (2006.01)

(21) Application number: **15165500.8**

(22) Date of filing: **28.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **28.04.2014 US 201414263947**

(71) Applicant: **Thermo Finnigan LLC
San Jose, CA 95134 (US)**

(72) Inventors:
• **Smith, Johnathan W.**
**San Jose, California 95134 (US)**
• **Boyd, Stephen P.**
**Stanford, California 94305 (US)**
• **Schoen, Alan E.**
**Kilauea, Hawaii 96754 (US)**
• **Tharakan, Sameer D.**
**Sunnyvale, California 94087 (US)**

(74) Representative: **Boult Wade Tennant
Verulam Gardens
70 Gray's Inn Road
London WC1X 8BT (GB)**

(54) **METHOD FOR DETERMINING A SPECTRUM FROM TIME-VARYING DATA**

(57)    Non-negative contributions to a spectrum from time-varying spectroscopy data can be determined. Reference basis functions can transform spectroscopy data into an equation (e.g., an objective function). Each reference basis function can correspond to a different time and a different particle, e.g., a different mass. The objective function can include a noise vector that modifies the spectroscopy data to provide a solution that is constrained to be non-negative. The noise vector can be estimated by minimizing the objective function to obtain an estimated vector, which can be truncated that satisfies a given constraint. The noise vector can be computed from the difference of the estimated vector and the truncated vector, and be accumulated. The noise vector can be used to update the objective function, thereby providing a new estimated vector in an iterative loop.

EP 2 940 625 A2

**Description**

CROSS-REFERENCES TO RELATED APPLICATIONS

This application is related to commonly owned U.S. Patent No. 8,389,929 entitled "Quadrupole Mass Spectrometer With Enhanced Sensitivity And Mass Resolving Power" by Schoen et al., filed March 2, 2010, the disclosure of which is incorporated by reference in its entirety.

FIELD

The present disclosure generally relates to spectroscopy, and more generally to deconvolution algorithms for determining a spectrum from spectroscopy data, such as identifying non-negative contributions (intensities) for the parameter (e.g., mass or frequency) of the spectrum from particles (e.g., ions).

BACKGROUND

To obtain high sensitivity and mass resolving power, and spectrometers can detect ions for a wide range of masses, and then deconvolve the spectroscopy data to identify the mass spectrum. U.S. Patent No. 8,389,929 describes a technique for obtaining the spectroscopy data and deconvolving the data to obtain a spectrum. However, the resulting spectrum typically has negative contributions to the spectrum. For example, certain masses can have a negative intensity in the resulting spectrum. These negative contributions are not physical (e.g., no negative mass ions) and can result in errors for the other parts of the spectrum that correspond to actual particles (i.e., the positive parts of the spectrum).
Therefore, it is desirable to provide systems, methods, and apparatuses for providing more accurate spectra.

BRIEF SUMMARY

Embodiments provide systems, methods, and apparatuses for determining non-negative contributions to a spectrum from time-varying spectroscopy data. For example, embodiments can use a set of reference basis functions to transform the spectroscopy data into an equation (e.g., an objective function). Each reference basis function can correspond to a different time and a different particle, e.g., a different mass. The objective function can include a noise vector that modifies the spectroscopy data so as to provide a solution that is constrained to be non-negative. Such a constraint can be imposed using a truncation operation. Other truncation operations besides removing negative contributions can be used. For example, a truncation operation can remove large negative contributions and allowing small negative contributions.
In some embodiments, the noise vector can be estimated by minimizing the objective function (e.g., by solving a linear equation) to obtain an estimated vector. The noise vector can be used to update the objective function, thereby providing a new estimated vector in an iterative loop. Once the estimated vector is obtained for a current iteration, a truncation operation can be performed on the estimated vector to obtain a truncated vector that satisfies a given constraint (e.g., a non-negativity constraint). The noise vector can be computed from the difference of the estimated vector and the truncated vector. The noise vector can be accumulated over the iterations and used to update the objective function. Upon convergence, the estimated vector can satisfy the given constraint within a specified tolerance, and the estimated vector can be used to determine the spectrum.
According to another embodiment, the parameters (e.g., masses or frequencies) having sufficiently high intensities (e.g., positive) can be used to refine the spectrum by restricting the domain of the solution to the reference basis functions having a non-negative contribution (or satisfy another constraint). An objective function can be minimized in this restricted space of reference basis functions that have been identified as corresponding to the particles that were actually detected.
Other embodiments are directed to systems and computer readable media associated with methods described herein.
A better understanding of the nature and advantages of embodiments of the present invention may be gained with reference to the following detailed description and the accompanying drawings.

BRIEF DESCRIPTION OF THE DRAWINGS

FIG. 1A shows a spectrum obtained from an unconstrained optimization process. FIG. 1B shows a spectrum obtained from a constrained optimization process.

FIG. 2 shows the Mathieu stability diagram with a scan line representing narrower mass stability limits and a "reduced resolution" scan line, in which the DC/RF ratio has been reduced to provide wider mass stability limits.

FIG. 3 shows a beneficial example configuration of a triple stage mass spectrometer system that can be operated with the methods of the present invention.

FIG. 4 is a flowchart illustrating a method 400 of determining a spectrum of a sample using a noise vector according to embodiments of the present invention.

FIG. 5 is a flowchart of a method 500 for determining a spectrum of a sample using an iterative truncation and accumulation process according to embodiments of the present invention.

FIG. 6 is a flowchart of a method 600 for determining a spectrum of a sample using solutions in multiple domains according to embodiments of the present invention.

FIG. 7 shows a plot of a raw data set and a mass spectrum determined according to embodiments of the present invention.

FIG. 8 shows a plot of a raw data set and a mass spectrum determined using a mask vector and seed values according to embodiments of the present invention.

FIG. 9 shows a block diagram of an example computer system 10 usable with system and methods according to embodiments of the present invention.

DEFINITIONS

A "spectrum" of a sample corresponds to a set of data points, where each data point includes at least two values. A first value corresponds to a discriminating parameter of the spectrum, such as a mass or frequency. The parameter is discriminating in that the particles are differentiated in the spectrum based on values for the parameter. The second value corresponds to an amount of particles measured from the sample that have the first value for the parameter. For instance, a data point can provide an amount of ions having a particular mass-to-charge ratio (also sometimes referred to as "mass"). The sample can be any substance or object from which particles are detected, such as photons or sound waves scattered from an object or ions derived from a substance.

A "reference basis function" corresponds to expected spectroscopy data for a particle with a given value for the parameter. For example, different reference basis functions would correspond to ions having different mass-to-charge ratios. Using more reference basis functions can provide greater resolution in the resulting spectrum.

An "objective function" has an input of an estimated vector from which a spectrum is derivable. The objective function is optimized (e.g., minimized) by identifying an estimated vector that solves an equation, e.g., a linear equation. As an example, the objective function can include residual difference of Ax-b, where A is an autocorrelation matrix and b is across correlation vector.

The "estimated vector" can correspond to a value for each reference basis function. At each iteration, the objective function can be updated based on the estimated vector from a previous iteration and based on a truncated vector. A truncated vector can result from a truncation operation defined by a constraint (e.g., a non-negativity constraint or other truncations threshold). Upon convergence of the objective function, the estimated vector or the truncated vector for the current iteration can be used as a final vector, which is used to determine the spectrum. In one embodiment, the final vector can be the spectrum.

DETAILED DESCRIPTION

Embodiments can be used to determine an accurate spectrum of a sample by deconvolving spectroscopy data to obtain an objective function. The objective function can be solved and updated according to specified constraints to obtain a final vector that satisfies the specified constraints within a tolerance. In one example, mass spectroscopy data can be deconvolved using reference basis functions (each corresponding to a different mass), and a mass spectrum having no negative contributions from any masses can be determined.

In one embodiment, a high resolution quadrupole acquires low resolution quadrupole mass spectrometer data, and a processing system analyzes the spectroscopy data to obtain high sensitivity and high resolution spectra. The mathematical processing can include least squares deconvolution that uses the auto correlation of the model instrument response to form a coefficient matrix A, and the cross correlation between the instrument response and convolved analytical data to form a vector b. Solving an objective function (including a residual Ax-b) for x results in a best fit estimate for the deconvolved mass spectrum. The value of x indicates the relative abundances of ions at or near various discrete mass-to-charge values. These abundances are inherently non-negative.

An unconstrained solution does not enforce non-negativity and therefore exhibits a bipolar noise band that masks small signals in the relatively large noise associated with nearby larger peaks. A non-negativity constraint and iterative improvement techniques can improve the results. One means of achieving this involves convex optimization techniques. By preventing the solution from fitting the data with negative values, that are always associated with noise and other variance, the corresponding positive fits are inhibited. A clean signal that can be fit remains. The signal to noise can thereby be dramatically improved and the resulting abundance sensitivity is further enhanced.

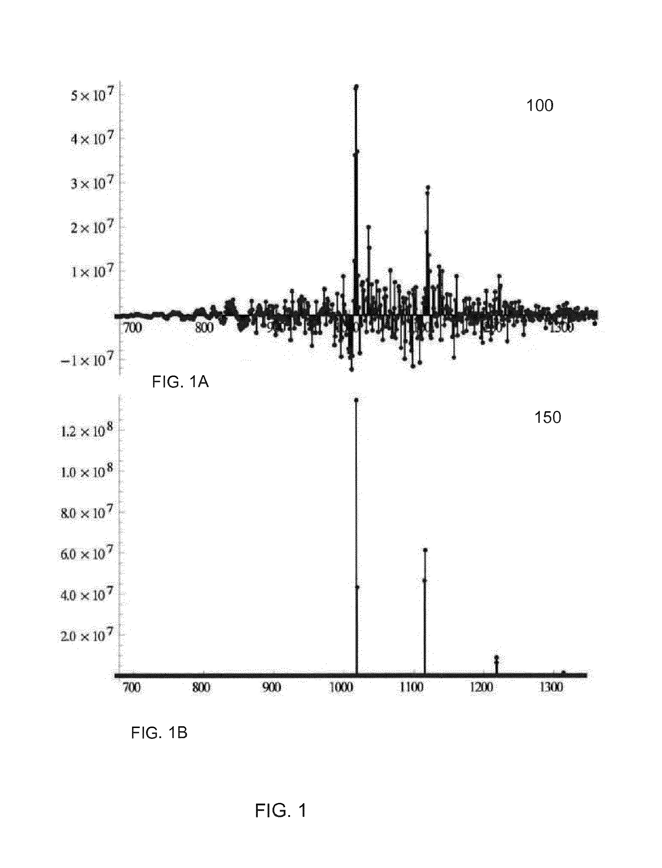

FIG. 1A shows a spectrum 100 obtained from an unconstrained optimization process. As one can see, spectrum 100 has many spurious positive and negative peaks. FIG. 1B shows a spectrum 150 obtained from a constrained optimization process. Spectrum 150 does not include the spurious peaks, and only includes the peaks corresponding to the actual ions detected. Thus, spectrum 150 is more accurate.

Examples of the type of spectroscopy data and systems for acquiring the data are first described, and then techniques for implementing the constraint solutions is described. For example, the use of a noise vector is described. Various techniques for estimating the noise vector are explained, along with different ways (e.g., using least squares or absolute value of a residual) of formulating an objective function to optimize for obtaining the spectrum. Refinement of the spectrum using domain restriction (e.g., explicitly setting the contribution of certain parameters of the spectrum to zero) is also discussed.

## I. TEMPORAL RESOLUTION

In spectroscopy, a device is commonly set to detect only particles having a single value for the discriminating parameter (e.g., mass or frequency) at any given time. For example, a mass spectrometer can be set to detect ions at a particular mass-to-charge ratio at a given instant in time. The settings of the mass spectrometer can then be changed to detect a different mass-to-charge ratio (sometimes referred to as just "mass"). To obtain high accuracy and detecting a particular mass, e.g., fractions of atomic mass unit (amu), then the mass spectrometer would have to be set to only detect a very narrow range of masses. However, using a very narrow range reduces sensitivity. Thus, embodiments can be set to detect particles having a relatively wide range for the discriminating parameter, thereby improving sensitivity. But, to maintain the resolution, a deconvolution process can be used to identify the signals corresponding to the different particles.

For example, embodiments of a high performance quadrupole system can use a deconvolution approach to extract mass spectral data from a sequence of multidimensional images produced by an ion detection system. An imaging system can detect ion trajectory details at the exit of a quadrupole mass filter and to use that information to extract mass spectra at higher sensitivity and resolution than possible with a classically operated quadrupole mass spectrometer. The quadrupole is a mass dispersive technology and not just a mass filter. A software challenge is to extract mass spectra from this data in real time, which can be difficult since particles with different parameters are simultaneously being detected at a given instant in time. The particles may be detected on a two-dimensional plane (or other number of dimensions), which may be used in the analysis to discriminate among particles with different parameters. In some embodiments, particles may just be detected at various points in time, with no spatial resolution.

*A. Spectroscopy Data*

As mentioned above, particles with a relatively broad range for the discriminating parameter are detected at any instant in time. The manner of controlling the range of particles can vary depending on the type of spectroscopy data. For a quadrupole mass spectrometer, the range is governed by the Mathieu equation. For a particle to be detected, the trajectory along the quadrupoles needs to be stable in the X and Y directions that are transverse to the motion along the quadrupoles.

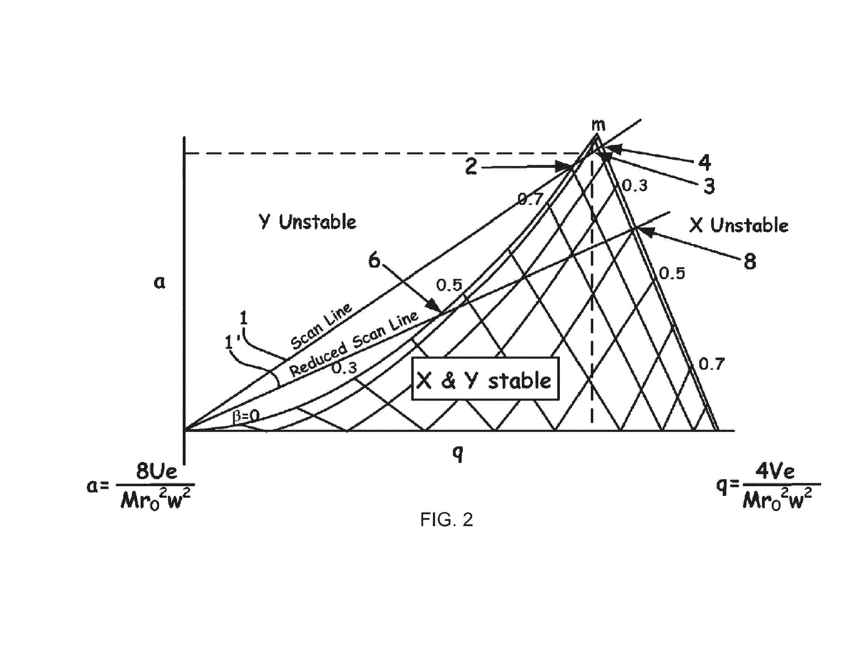

FIG. 2 shows such an example of a Mathieu quadrupole stability diagram for ions of a particular mass/charge ratio. The Mathieu equation can be expressed in terms of two unitless parameters, a and q, where a is proportional to a DC magnitude and q is proportional to an AC amplitude (also referred to as RF amplitude). The parameters a and q are unitless parameters that normalize the ion mass to charge ratio and system design parameters such as RF frequency and quadrupole field radius, as is well known in the art. Therefore, the Mathieu stability diagram is a mass independent representation of the a:q parameter space designating settings that yield stable ion trajectories. FIG. 2 shows a stable region in the middle where the trajectory is stable, an unstable region on the left where the trajectory is not stable in the Y direction, and an unstable region on the right where the trajectory is not stable in the X direction. Only particles in the stable region will pass through the quadruple and be detected.

The operating scan line 1 is a set of values that are inversely proportional to mass. Different points on scan line 1 correspond to different masses. The masses that fall within the crosshatched stable region have a stable trajectory. As shown, masses on scan line 1 between entrance 2 and exit 4 are stable. The mass m corresponds to the mass at the peak 3 of the stable region. Having scan line 1 intersect at the top of the stable region causes a relatively narrow range of masses to have a stable trajectory, and thus be detected.

To detect different masses, a and q are changed in a predetermined manner. As these values change, different masses will have a stable trajectory. Conceptually, the peak of the stable region can travel along scan line 1, thereby causing a different mass (or relatively narrow range of masses) to be detected at different times, in conjunction with the progressive change in a and q. However, having a narrow range of detectable masses can decrease sensitivity.

A reduced scan line 1 provides a larger range of masses to be detected, as shown by entrance 6 and exit 8. This increase in sensitivity can come at the cost of a lower resolution, if the raw data was simply taken as is. To solve this problem, embodiments identify that different masses will enter the stable region at different times and exit the stable region at different times. Each mass exhibits a different pattern on the two-dimensional detector. As described in U.S. Patent No. 8,389,929, a deconvolution can be used to identify contributions in the spectroscopy data from particles with different masses. As described below, embodiments of the present invention provide improved analysis in determining a spectrum using values obtained for the deconvolution.

In other embodiments, the detector can acquire position in only one dimension, as opposed to two dimensions. Further, an exit phase of the particle can be detected to identify its position in three dimensions, e.g., by using the exit phase in combination with two-dimensional spatial resolution data. The range of the discriminating parameter for other spectroscopy data can be determined in a different manner than described above for a quadrupole mass spectrometer. As other examples, the exit phase can be combined with spatial resolution data in one dimension to provide a position in two dimensions, or the phase information alone can constitute a single dimension of data.

In one embodiment, just the exit time without phase information or spatial resolution can be used, e.g., just the detection time can be used with no spatial resolution. For example, the amount of particles being detected at any point of time would be a combination of the ions whose mass falls within the stable region. The various contributions from the different masses to the amount for each time period can be extracted, as is described below.

*B. System*

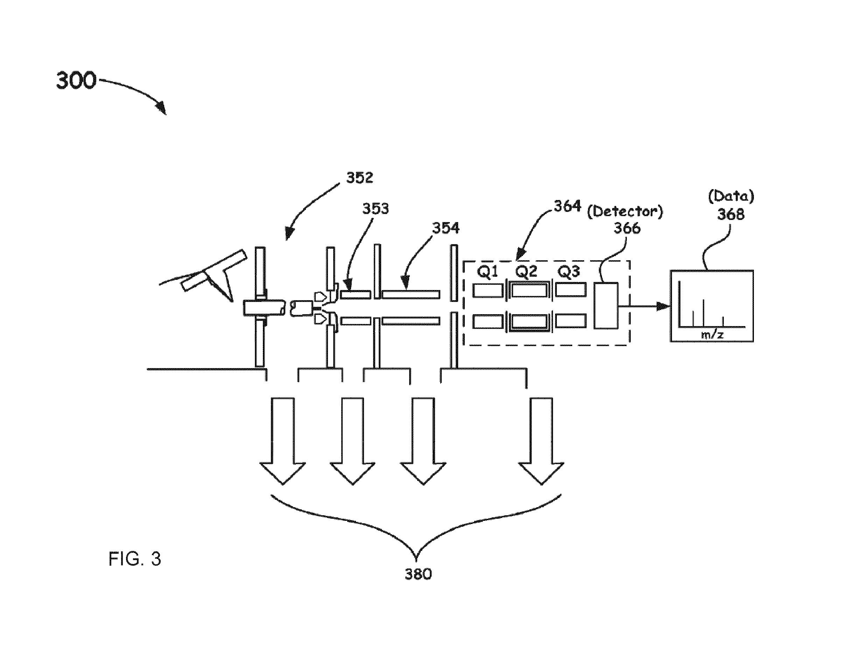

FIG. 3 shows an example configuration of a triple stage mass spectrometer system. The operation of mass spectrometer 300 can be controlled and data can be acquired by a control and data system (not depicted) of various circuitry of a known type, which may be implemented as any one or a combination of general or special-purpose processors (digital signal processor (DSP)), firmware, software to provide instrument control and data analysis for mass spectrometers and/or related instruments, and hardware circuitry configured to execute a set of instructions that embody the prescribed data analysis and control routines of the present invention. Such processing of the data may also include averaging, scan grouping, deconvolution as disclosed herein, library searches, data storage, and data reporting.

A sample containing one or more analytes of interest can be ionized via an ion source 352. The resultant ions are directed via predetermined ion optics that often can include tube lenses, skimmers, and multipoles, e.g., reference characters 353 and 354, selected from radio-frequency RF quadrupole and octopole ion guides, etc., so as to be urged through a series of chambers of progressively reduced pressure that operationally guide and focus such ions to provide good transmission efficiencies. The various chambers communicate with corresponding ports 380 (represented as arrows in the figure) that are coupled to a set of pumps (not shown) to maintain the pressures at the desired values.

The example spectrometer 300 includes a triple quadrupole configuration 364 having sections labeled Q1, Q2 and Q3 electrically coupled to respective power supplies (not shown). As is known in the art, quadrupoles Q1 and Q3 are typically operated as mass filters (i.e., to selectively transmit ions within a desired range of mass-to-charge ratios) by application of AC and resolving DC voltages to their electrodes, whereas Q2 is typically operated as an AC-only ion guide and functions to fragment ions transmitted thereto by Q1 and to deliver the resultant fragment ions to Q3. The ions having a stable trajectory reach a detector 366, which can detect particles hitting the detector at any given instant in time. In some embodiments, detector 366 can also detect a position of an ion in one or more spatial dimensions (e.g., a position in a 2D plane). The spectroscopy data can include an intensity at each location for each time step.

Such a detector is beneficially placed at the channel exit of quadrupole Q3 to provide data that can be deconvolved into a rich mass spectrum 368. The time-dependent data resulting from such an operation is converted into a mass spectrum by applying deconvolution methods described herein that convert the collection of recorded ion arrival times and positions into a set of m/z values and relative abundances.

To detect a location, a lens assembly can be used, e.g., to detect spatial information and allow the use of the camera. Spectrometer 300 can include a helium cooling cell to produce a mono energetic ion beam to ensure each ion species produces a same set of images. Instrument parameters set to be invariant with ion mass can help provide uniformity for a set of images for any given individual mass-to-charge species across the mass range. The exit position and time of every ion can be recorded at a rate of several million frames per second.

In some implementations, a unit of acquisition is a multidimensional representation of ion exit patterns. The unit can be referred to as a voxel or a volumetric pixel. Each voxel can correspond to a stack of image planes taken at a number of times (e.g., 8) spanning one quadrupole RF cycle. The number of planes in a voxel depends on how fast the images are being taken and the time of a cycle (i.e., how fast the RF device cycle time is). In one embodiment, the device would be scanned at the same rate for all samples. Fewer planes can reduce the data load per voxel to allow more voxels per second and therefore scan faster.

As an example, each plane is a 64 by 64 pixel image, binned into 64 rows and 64 columns aligned with the quadrupole's x and y axes for a total of 128 readings per plane. In this example, each pixel has a multichannel analyzer for the 8 sub-RF image planes that allows multiple RF cycles to be accumulated. Using 16 RF cycles for the binning and sampling process, 1.123 MHz RF results in exactly 70187.5 multidimensional voxels per second. Each is 8 planes by 128 reading per plane or 1024 16 bit readings per voxel. The data throughput is therefore 143.744 megabytes per second. This amount of data can easily be handled by a 4 or 8 lane PCI express bus.

*C. Deconvolution*

Advanced signal processing algorithms can deconvolve the mix of ions which are now differentiated in space and time. In some embodiments, the pattern for each ion species on a detector is the same, but occurs at a different time. For example, the scan over the parameter can become exponentially faster as the parameter increases, which can allow the patterns (i.e., the patterns of detected particles over time) to be invariant with respect to mass.

One can acquire reference data and auto-correlate the reference data with itself. For example, a calibration sample can be of an ion species with a known mass, and thus one can determine the spectroscopy data consistent with an ion having the known mass. The reference data can correspond to a reference basis function. A set of reference basis functions can be determined by analyzing samples of different mass.

In one embodiment, only certain reference basis functions are determined empirically from calibration samples, and the other reference basis functions can be determined via interpolation, since the patterns are approximately the same but differ in time. For example, reference basis functions can be determined at mass 100, 300, and 600. The reference basis functions for masses between 100 and 600 can be determined from these three reference basis functions, e.g., via interpolation. For some reference basis functions, the function for a next mass can be calculated by shifting the previous function by an appropriate time step. In one embodiment, the reference basis functions can depend linearly in time and exponential in mass. For example, the mass range can be scanned exponentially faster as the mass increases, which can allow the reference basis functions to be invariant with mass.

The N reference basis functions $\Phi_i$ {i=1,N} can be used in a deconvolution process to determine a spectrum of an unknown sample. The function space defined by these reference basis functions can be defined by an autocorrelation matrix A calculated as $< \Phi_i, \Phi_j >$, where each matrix element can be computed as an integral of a product of the two corresponding reference basis functions.

Spectroscopy data D can be acquired of the unknown sample. A deconvolution of the spectroscopy data D can be computed as a cross-correlation vector b, where each element may be computed as an integral of the corresponding basis function with the data D. A cross-correlation value for particular reference basis function can be computed as an integral, which is calculated as a sum of point by point multiplications of the reference basis function and the spectroscopy data.

The contributions to the data D from ions can be calculated from the equation Ax=b, where each element of the vector x corresponds to a contribution to the data D from a particular reference basis function. As each reference basis function corresponds to a different mass (or other discriminating parameter in other embodiments), a spectrum can be determined from x.

The number of reference basis functions relate to the desired accuracy (i.e., one reference basis function for each mass to discriminate). In one aspect, the spectrometer starts at the same parameter for the calibration samples and the test samples, and scans at a same rate. In this manner, the reference basis functions obtained from the calibration samples are applicable for analyzing the data for a test sample. The difference (e.g., time step) between the reference basis function depends on how fast the scan is. In some implementations, more than one million reference basis functions can be used. The reference basis functions can be broken down into chunks of, e.g., 1024 to 32768 reference basis functions, for more efficient processing.

The cross-correlation vector b corresponds to a projection of the reference basis functions onto the data set. The cross-correlation provides a level of similarity between the reference basis function and the data set.

Thus, a cross-correlation value for a particular basis set can provide a measure of how much the data set can be attributed to the reference basis function, if the basis function were orthogonal. But, since the reference basis functions are not orthogonal, ion species that are not present would still have a non-zero cross-correlation with the data set. Thus, a deconvolution can be performed using the auto-correlation matrix A to determine which ion species are present by identifying which reference basis functions truly are represented in the data set.

In some embodiments, regarding the calibration sample, the calibrant is constrained to be a single mass with a shape defined by the instrument operating conditions. For example, a peak width can be between one and fifty atomic mass units, and the number of voxels acquired is at a rate appropriate for the desired resolution and scan speed. This reference data can be processed to form the autocorrelation matrix A, e.g., as a series of dot products of the reference peak shifted with respect to itself.

### 1. Example Process

In one example, a matrix element of the autocorrelation matrix A can be determined by integrating over a pair of reference basis functions in the time domain. For instance, the values of each of the two reference basis functions at respective times can be multiplied and the results summed. As the reference basis functions are separated in time, certain pairs of reference basis will not overlap and thus will have a zero for the corresponding matrix element of the autocorrelation matrix A. These zero matrix elements can be identified based on the time separation. Thus, embodiment can order the data to skip processing a large portion of the data, thereby providing a sparse matrix. To improve storage and processing, only the non-zero may be stored and used. The cross-correlation vector can be determining using similar integration techniques.

In another example, Fourier convolution can be used in determining the autocorrelation matrix A. The Fourier transform (e.g., FFT) of the data series can be produced once and saved, and then then multiplied by the complex conjugate of itself. The inverse FFT of this product can then be sampled with a granularity of the voxel size (e.g., 1024) to produce the autocorrelation matrix.

In the case of a voxel containing 1024 data points, this process can average noise very effectively and decimate the data load by three orders of magnitude. For a sensor with 64 rows and 64 columns, data compression by a factor of 32 can be achieved by the binning operation on the sensor itself. The overall image compression to this stage of processing can therefore be 32768 or over four orders of magnitude. This can be a lossy compression, but the binning mode can be chosen such that sub-RF specificity persists and the linear and separable ion motion in the X and Y quadrupole dimensions is largely retained.

Next in this example, a series of convolved peak shapes is acquired under the same conditions that produced the reference peak shape. The complex conjugate of the saved FFT of the reference data is multiplied by the FFT of the analytical data. The overlap-add or overlap-save methods allow this process to proceed in a stream to produce a cross-correlation result limited in length only by the appropriateness of the single reference dataset.

In one embodiment, GPUs can be used to perform the FFT. CUDAFFT is a GPU accelerated fast Fourier transform library. Any implementation of FFT, such as FFTW or Intel's MKL FFT, can be used. In another embodiment, Advanced Vector Extensions AVX2 instructions may be used in CPUs.

After A and b are determined, the next step can deconvolve the underlying mass spectral data from observed auto-correlation and cross-correlation vectors. To do this, all possible shifts of the autocorrelation vector are placed into a square matrix A. The underlying mass spectrum x can be determined by solving Ax-b=0. In some embodiments, the matrix A can be inverted such that $x = A^{-1} b$. However, solving this equation exactly can lead to a solution for x having some negative values, where such negative solutions are not physical. Embodiments can address such problems.

## II. NON-NEGATIVE SOLUTIONS

As mentioned above, the resulting spectrum of spectroscopy data obtained from a sample can be determined by solving Ax-b=0, where A is an autocorrelation matrix computed from reference basis functions (each corresponding to a different particle) and b is a cross-correlation vector between the reference basis functions and the spectroscopy data. But, the unconstrained solution of Ax-b=0 can provide negative solutions, which are not physical and cause errors. The negative values effectively would correspond to the negative existence of particles at a given parameter, which is not a physical result. Thus, embodiments can determine a constrained solution that minimizes Ax-b or some objective function thereof, where x can be constrained to be non-negative or other constrained (e.g., larger than some negative value). A challenge is to solve the non-negative deconvolution problem for large problems, fast enough to keep up with the raw measurement data being collected by the instrument.

### A. Optimization of Objective Function

The equation Ax-b=0 can result from minimizing an objective function that includes the residual Ax-b. In one embodiment, the objective function can be formulated as a least squares problem. A is a square positive definite Hermitian banded matrix *A*, and formed by autocorrelation of the reference data set and populating the matrix with every possible shift of said autocorrelation. As stated above, the vector *b* can be formed by the cross correlation of every possible shift of the reference dataset and the acquired convolved analytical dataset. Solving this equation for *x* can provide the positions and abundances of the contributing components of the convolved analytical dataset.

In least squares, the variable x is chosen so as to minimize

$$\frac{1}{2} x^T A x - b^T x$$

where A and b are as described above. This has the simple solution

$$x = A^{-1} b$$

that entails solving a set of n linear equations in N unknown quantities. This gives the best estimate of x, in a least-squares sense, given the measurements b. Embodiments are concerned with the case when this simple solution of x represents a vector of non-negative quantities, such as intensities or amounts of some chemical species. In standard deconvolution, the estimated x can (and often does) have negative signs in its components, which are nonphysical. In practice, only the non-negative parts of the estimated x are shown. The negative entries, however, have the effect of degrading the estimation quality as the negative entries allow other spurious positive entries, which give errors in the positive components of x as well. The estimate of x obtained using nonnegative deconvolution is typically far superior to the estimate from standard deconvolution, especially when the vector x being estimated is sparse, that is, has many entries equal to zero. In this case, embodiments are very good at estimating the true entries that are nonzero.

In non-negative deconvolution, embodiments minimize the same squared error, but embodiments additionally impose the constraint that all entries of x must be nonnegative (or other constraint in value). Such a quadratic program (QP) can be solved using various techniques, at least when the dimension of x is not too large, but it cannot be solved quickly using standard techniques for real world spectroscopy data. In one implementation, embodiments use a noise term to constrain the solution of x to be non-negative. The use of the noise term can help embodiments to solve large dimension problems quickly.

*B. Noise*

Unfortunately, mass spectral data has noise from numerous sources. One source is the Poisson statistics associated with discrete ion observation. This unavoidable noise is proportional to the square root of the signal level when expressed as ions, such that stronger signal always has more absolute variance or noise. Another intrinsic noise source is the varying signal level as sample elutes from the LC. This chromatographic skew is a function of LC peak shape and is convolved with signal intensity. Other sources of noise are electrospray sputter, and power supply fluctuations. The detector itself can also have multiple sources of noise. The noise floor in each binned pixel row and column can be the equivalent of many hundreds of electrons, as there is noise in the amplifiers and in the ADC circuits. A helium cooling cell can be used to constrain the ion entrance phase space, and thus reduce noise, but some noise will still remain.

Chromatographic skew can be reduced in the following manner. A quadrupole is a continuous beam monitoring technology that convolves the ion source and chromatography signal gradients with the acquired mass spectral response. This is a well know phenomenon known as chromatographic skew, which affects the mass filter's peak shape and the integral of the image intensity. Although mass spectral peak position is primarily indicated by the spatial distribution within voxels, the overall intensity also contributes. Chromatographic skew induces an intensity bias that increases signal on the trailing end of each spectrum on the leading side of an LC peak and leading end of each spectrum on the trailing side of an LC peak. Scanning rapidly with respect to the LC gradient can reduce this effect, so one operation mode is to scan as quickly as practical and average or filter the data to a bandwidth appropriate for the chromatography. In addition, by providing an acquisition pipeline, the chromatography gradient can be measured or estimated by interpolation, extrapolation or curve fitting. This information can be used to compensate or cancel the intensity gradient within each deconvolved chunk (see section VI.B) to further reduce the impact upon the numerical results. Any knowledge that can be imparted to the mathematical processing can be used to improve the results.

These noise sources are not correlated with peak position or intensity, but the solution to Ax-b=0 is a deterministic operation that must account for every value in the dataset. In practice, noise expresses itself as variance in the resolved spectral intensities and as a band of bipolar noise proportional to the signal intensity in the vicinity of each peak across a range similar to the width of the autocorrelation vector. The bipolar noise appears to be very near the Nyquist limit so a low pass filter can trade off mass spectral peak shape for signal to noise. An almost equivalent alternative is to limit the stride in the Ax-b=0 problem ((i.e., the time step between the reference basis functions, and thus the number of basis functions and the resolution). The stride is the delta step in both the reference and acquired data set that limits the ultimate bandwidth. It has the same effect as a low pass filter with the added benefit of faster processing. The resolution limit is related to the nature of the autocorrelation vector combined with the noise. Accordingly, a finer sample density will not always result in higher resolution.

The bipolar noise can be viewed as the result of the attempt to make a precise fit. Large positive impulse responses alternated with large negative impulse responses sum to make a small noise signal that is meticulously fitted along with the data. Thus, the noise can lead to negative solutions. The noise itself is relatively small, so if the formulation does not have the freedom to include large negative values, it will not be able to add the corresponding erroneous positive values to fit the noise. If the noise is truly random, then the integral of the noise in the solution is zero, while the integral of the signal is the mass spectral data intensity. A figure of merit is the ratio of the sum of the absolute values of the results x divided by the sum of x.

*C. Removing Noise to Obtain Non-Negative Solution*

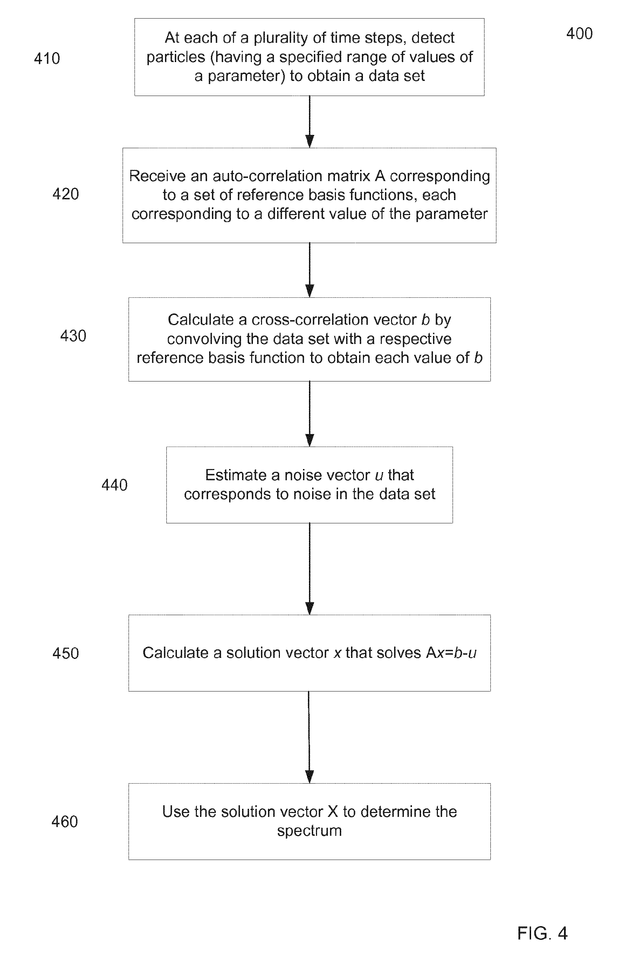

FIG. 4 is a flowchart illustrating a method 400 of determining a spectrum of a sample using a noise vector according to embodiments of the present invention. Method 400 can be performed by a computer system, as can other methods described herein. As examples, the spectrum can be a mass spectrum (e.g., of molecules of the sample), a frequency spectrum of electromagnetic radiation (photons) reflected or emitted from a sample (e.g., emitted after photons are absorbed by the sample), a spectrum obtained from sound waves reflected from the sample (which could be an object or multiple objects), and the like.

At block 410, at each of a plurality of time steps, a spectrometer is operated to detect particles having a specified range of values of a parameter, thereby obtaining a data set. The detector can obtain locations of particles in at least one dimension. For example, during a specific time step, the spectrometer can be set to detect ions having a specific range of masses (i.e., ions of more than one mass would be detected at any one time). As another example, the spectrometer can be set to detect photons having a specific range of energy or frequency. Regarding the detection of the particles along at least one dimension, system 300 can be used, as an example to detect the location along two dimensions. Other spectrometers can use imaging by one or more sensors to determine the locations in any suitable manner, e.g., using a digital camera.

In one embodiment, the spectrometer performs a continuous scan, such that the range increases or decreases incrementally from one time step to another. For example, if the range from 8-12 amu, then a next time step might detect ions having a range of 9-13 amu, and then 10-14 amu, and so on. The increment (resolution) in amu can be less than 1 or more than 1, which also applies for other parameters. This scanning of the spectrometer can be predetermined, and done the same for all samples (at least for a particular calibration of the instrument).

Since the spectrometer is set to detect particles within a range of parameter values during each time step, particles having a particular parameter value will be detected over multiple consecutive time steps. In the example above, ions with a mass of 12 amu would be detected over 5 time steps, where an amount of particles can be detected at each location during each time step. The subset of data corresponding to each particle of a specific parameter will be substantially similar to each other, but will occur over different time intervals. For example, an ion with a mass of 10 will begin being detected at an earlier time step than an ion with mass 100, when the spectrometer is scanned in an increasing fashion.

At block 420, a computer system received an auto-correlation matrix A corresponding to a set of reference basis functions. Each reference basis function corresponds to a different value of the parameter. For example, a sample having molecules with a known value for the parameter (e.g., a known mass) can be analyzed by the same or similar spectrometer. The spectrometer can then be scanned according to a prescribed scanning process, and the resulting data would correspond to a contribution to a dataset of particles having that specific value. Thus, the resulting data can be used as a reference basis function, which can be used to determine an amount of particles corresponding to the specific value for the parameter.

In one embodiment, one could use particles having each parameter value, e.g., equal to the same resolution as the scan. But, such a process would require many calibration samples. Instead, one can determine several basis functions for a few parameter values (e.g., 100, 300, and 600), and then use those basis functions to determine the others, e.g., using a prescribed formula (such as interpolation).

The set of reference basis functions do not necessarily correspond to all of the parameters in the scan. For example, the scan might be from 21 amu to 500 amu by 1 amu increments, but only a portion of the 480 basis functions might be used. In one implementation, the basis function might correspond to consecutive masses (e.g., 100-200) or non-consecutive masses (e.g., 21-25, 50-60, and 110-120). One of skill in the art will appreciate that the variety of sets of reference basis functions that can be selected.

At block 430, a computer system calculates a cross-correlation vector $b$ by convolving the data set with each reference basis function to obtain cross-correlation values of $b$. For example, the data set can be convolved with a first reference basis function (which might correspond to a mass of 10 amu) to obtain a measure of the contribution of ions having 10 amu, as detected by the spectrometer. The same set of reference basis functions that are used to determine A would be used to determine $b$. The selected set of reference basis functions can correspond to only the particles that are estimated to be in the sample. This estimate is described in more detail in the domain restriction example in a later section.

At block 440, a noise vector $u$ that corresponds to noise in the data set is estimated. The noise vector $u$ can be estimated in a variety of ways. In one embodiment, the noise vector $u$ can be calculated as part of an iterative technique that accumulates negative contributions to intermediate estimates of a solution vector $x$. In this manner, the noise vector $u$ can correspond to parts of the data set causing negative solutions. Further details are provided in a later section. In other embodiments, the noise vector $u$ can be estimated based on estimated values of other samples or other techniques, e.g., as described herein.

At block 450, a solution vector x that solves $Ax=b-u$ is calculated. As the noise vector $u$ is removed from the cross-correlation vector $b$, the remaining vector should correspond to contributions from actual particles and not noise. Thus, a non-negative solution can be determined.

At block 460, the solution vector $x$ is used to determine the spectrum. The spectrum can be determined in a variety of ways, and can depend on the type of spectrometer being used. The solution vector $x$ is effectively determined in a time domain, and a transformation between time and the parameter domain (e.g., a mass spectrum) can be used to obtain the spectrum in the parameter domain. For example, in the case of the quadrupole mass spectrometer the spectrum can be scanned exponentially, and the solution vector x is rescaled from the exponential sampling into a linear scale.

### III. ESTIMATING NOISE

As described above, embodiments can estimate a noise vector $u$, which can be used to modify a cross-correlation vector $b$ such that a solution vector $x$ is non-negative (or at least no large negative values). A spectrum determined from the solution vector $x$ would not suffer from negative amounts, which are not physical, and be more accurate with regard to amounts of actual particles detected.

#### A. Truncation and Accumulation

In one embodiment, the noise vector $u$ is estimated by iteratively minimizing an objective function (e.g., by solving a linear set of equations) to identify an estimated vector. The estimated vector is used in a truncation operation to impose one or more constraints to obtain a truncated vector, which is used to estimate a noise vector. The noise vector can be used to update the objective function and ultimately lead to a solution vector that satisfies the constraints, e.g., by removing the noise from the data set.

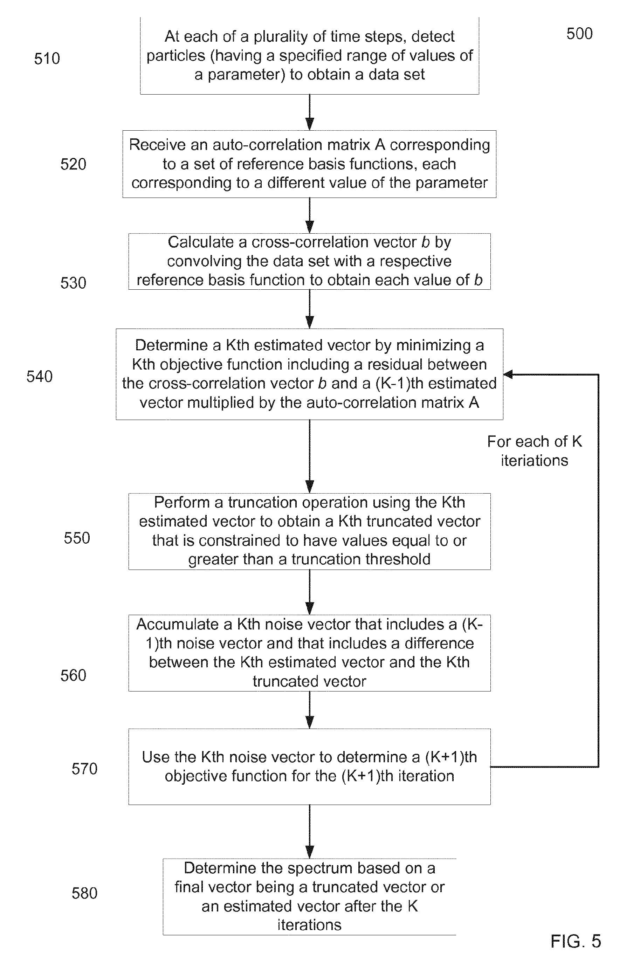

FIG. 5 is a flowchart of a method 500 for determining a spectrum of a sample using an iterative truncation and accumulation process according to embodiments of the present invention. Parts of method 500 can be performed in a similar manner as method 400. Method 500 may be performed with various formulations of the objective functions, some of which are discussed in more detail below.

At block 510, at each of a plurality of time steps, a spectrometer is operated to detect particles having a specified range of values of a parameter. Block 510 may be performed in a similar manner as block 410.

At block 520, a computer system received an auto-correlation matrix A corresponding to a set of reference basis functions. Block 520 may be performed in a similar manner as block 420.

At block 530, a computer system calculates a cross-correlation vector $b$ by convolving the data set with each reference basis function to obtain cross-correlation values of $b$. Block 530 may be performed in a similar manner as block 430.

Blocks 540-570 are performed iteratively. For example, the computer system can perform blocks 540-570 for each of a plurality of iterations. An iteration can be referred to as a Kth iteration, (K-1)th iteration, or (K+1)th iteration.

At block 540, a Kth estimated vector is determined by minimizing a Kth objective function. The objective function includes a residual between the cross-correlation vector $b$ and a (K-1)th estimated vector multiplied by the auto-correlation matrix A. For example, if the (K-1)th estimated vector is $z^{k-1}$, then the residual for the Kth iteration can be calculated as $Az^{k-1}-b$. The residual can provide a measure of how close the current estimated vector is to minimizing the objective function. The objective function can also include other terms, such as a noise vector $u$.

The objective function can be determined according to various formulations. In one embodiment, the objective function corresponds to a least squares minimization. For example, a least squares minimization of a residual of $Az^{k-1}-(b-u)$. Other embodiments can use different norms for minimizing, such as the absolute value (referred to as $l_1$-norm herein), a Huber function, or $l_2$-norm (least squares).

At block 550, a truncation operation is performed using the Kth estimated vector to obtain a Kth truncated vector that is constrained to have values equal to or greater than a truncation threshold. For example, the negative values of the Kth estimated vector can be removed (i.e., made zero), thereby leaving the positive values of the Kth estimated vector. In this example, the truncation threshold would be zero. In other examples, the truncation threshold could be a relatively small negative number (e.g., 1 %, 0.1 %, or 0.01 % of the maximum positive value of the Kth estimated vector).

The truncation operation can also include the current estimate of the noise vector $u^k$. For example, the truncation operation can be designated as $x^k = (z^k + u^k)_+$, where the "+" denotes the truncation operation and $x^k$ is the Kth truncated vector, where any values less than truncation threshold can be made equal to the threshold or to zero. The inclusion of the noise vector allows the truncated vector to account for the inclusion of the noise vector in the objective function. In this manner, values that were initially negative, can later become positive, and the initial estimate of noise can be removed, thus not causing errors in the final estimate of the noise.

At block 560, the computer system accumulates a Kth noise vector that includes a (K-1)th noise vector and that includes a difference between the Kth estimated vector and the Kth truncated vector. The Kth noise vector corresponds to a current estimate of the noise vector. In one embodiment, each iteration identifies an incremental change in the estimate of the noise vector, and this incremental change can be summed to obtain a final noise vector upon minimization of the objective function.

In one embodiment, the accumulation can include the equation $u^{k+1} := u^k + (z^{k+1} - x^{k+1})$. This equation corresponds to implementations where the noise vector is included in the truncation operation.

At block 570, the Kth noise vector is used to determine a (K+1)th objective function for the (K+1)th iteration. In one embodiment, a residual $Az^{k-1} - (b-u)$ is minimized as part of minimizing the objective function. As mentioned above, least squares, sum of absolute values, or a Huber function are example objective function of the residual.

At block 580, the spectrum is determined based on a final vector. The final vector can be a truncated vector or an estimated vector after the K iterations. At convergence of the optimization process, the truncated vector and the estimated vector should be equal to each other within a tolerance. For example, the optimization process can specify a tolerance of accuracy, which can be used in determining when the iterations can stop.

In one embodiment, the final vector is used to determine N reference basis functions that have above a cutoff contribution (e.g., zero) to the data set. The values of the final vector corresponding to the N reference basis functions can be used to determine an abundance of particles corresponding to the N reference basis functions.

*B. Convergence*

As mentioned above, at convergence, the estimate vector $z$ is roughly equal to $x$. The convergence criteria can be specified as a difference between $z$ and $x$. In other embodiments, a specific number of iterations can be used, so that computational effort is not used to determine whether any convergence criteria is satisfied. In one embodiment, a maximum number of iterations that can be performed within an allotted time interval are performed. Empirical tests can be used to confirm that the convergence is satisfactory. In this manner, more iterations can be performed, as time is not wasted testing for convergence. As the size of the problem is known ahead, the time per step can be known, thus allowing for a determination of a number of iterations that can be performed within an allotted time.

*C. Least Squares Formulation*

As mentioned above, one formulation of the objective function is a least squares formulation. Below is a derivation of the least squares formulation. We are going to solve a problem of the form:

$$\text{minimize } (1/2)\| Fx - g \|_2^2 + (\kappa/2)\| x \|_2^2$$

$$\text{subject to } x \geq 0,$$

with variable $x \in R^n$. The data are $A \in \mathbf{R}^{m \times n}$, $b \in \mathbf{R}^m$, and $\kappa \geq 0$. The parameter $\kappa$ is regularization parameter. This is the nonnegative least-squares problem. (Without the nonnegativity constraint, it is the ordinary least-squares problem, with solution $x = (F^TF + \kappa I)^{-1}F^Tg$.)

We can write the problem as:

$$\text{minimize } (1/2)x^T(F^TF + \kappa I)x - (F^Tg)^Tx$$

$$\text{subject to } x \geq 0.$$

With $A = F^T F + \kappa I$, $b = F^T g$, we get the problem:

$$\text{minimize } (1/2)x^T A x - b^T x$$

$$\text{subject to } x \geq 0.$$

After the initial setup to create matrix $A$ from the auto correlations and vector $b$ from the cross correlations, an estimated vector can be determined by computing

$$z = (A)^{-1}(b).$$

This formula can be used as part of block 540 of method 500 to calculate the estimated vector $z$ for the current iteration. The superscript -1 denotes the matrix inverse, which is normally a numerically costly operation. In one embodiment, additional terms can be added to provide more stability. For example, the first iteration of the estimated vector can be determined as:

$$z = (A + \rho I)^{-1}(b).$$

$I$ is the identity matrix, a square matrix with ones on the diagonal and zeros elsewhere. This gives a result that is close to the normal deconvolution answer, but is perturbed by the addition of $\rho I$ to the $A$ matrix. The value of rho ($\rho$) is small and essentially adds white noise or a small offset to the diagonal of the banded matrix $A$.

As described above, embodiments can take the results from the estimated $z$ vector and partitions them into two pieces; one piece is called the truncated vector $x$ and is filled with the nonnegative values and the other piece is the noise vector $u$ and is filled with the negative values. The values that were partitioned into positive ($x$) and negative ($u$) parts can be used to improve the answer ($z$) in an iterative process. On a first iteration, the vectors $x$ and $u$ can be zero so the first pass is simply the perturbed bipolar result described above. On all subsequent iterations, the estimated vector $z$ can be computed as:

$$z := (A + \rho I)^{-1}\left(b + p(x - u)\right)^{-1}.$$

In one embodiment, $\rho$ can stay constant during the formulation, and thus $(A + \rho I)^{-1}$ only needs to be determined once. If $\rho$ did change from one iteration to another, then the new inverse can be calculated for each iteration where $\rho$ changes.

Since $u$ contained the negative values, which are not realistic answers to the problem, the opposite of $u$ is the direction needed to obtain a converged answer. $x$ is the positive answers and is towards the desired direction for the result. The addition of $x$ and $-u$ are then used with $\rho$ as a weight determining how far to go in that direction towards the answer on each loop iteration. Rho, $\rho$, can be interpreted as the step size of the iterative process.

A next step (e.g., block 550 of method 500) can impose the non-negativity constraint by taking only the positive part of the result $z$ after recombining it with the accumulated negative results $u$. On the first pass it is simply the positive values of the solution $x$.

$$x := (z + u)_+$$

A negative noise value $u_i$ can alter $x_i$ when $z_i$ is positive and has an absolute value greater than the corresponding negative $u_i$ value. Further, adding $u$ in this step can be used to update $u$ in the next step (provided below), e.g., when $z_i$ for the current iteration is non-zero and thus not noise; therefore, old negative values from previous iterations should not be subtracted from $b$.

This value of $z$ is then used to update $u$, which accumulates the negative components, as may be done in block 560 of method 500. Then $u$ becomes:

$$u := u + (z - x)$$

As the algorithm proceeds, $u$ accumulates all negative results that are inconsistent with the physical reality of the problem as well as the white noise added by $\rho I$, if such a term is used. At convergence (e.g., as define by a specified number of iterations or a convergence criteria), $x$ is approximately equal to $z$ and either may be used as the non-negative constrained solution. As shown above, the noise vector $u$ is used to update the objective function, which is then used to determine a new estimated vector.

Accordingly, the iterative technique can be provided as:

$$z^{k+1} := (A + \rho I)^{-1}\left(b + \rho(x^k - u^k)\right)$$

$$x^{k+1} := \left(z^{k+1} + u^k\right)_+$$

$$u^{k+1} := u^k + \left(z^{k+1} - x^{k+1}\right)$$

Here $\rho$ is a positive parameter. In the second step, $(\,\blacksquare\,)_+$ is the nonnegative part of the vector, or other truncation operation with a truncation threshold that can differ from zero. As the algorithm runs, both $x^k$ and $z^k$ converge to the solution; $x^k$ has the property of being strictly nonnegative, and $z^k$ being nonnegative within a certain tolerance.

The term $b + \rho(x^k - u^k)$ can correspond to a Kth corrected vector. The Kth corrected vector can have other forms. For example, the Kth corrected vector can be $b - (u^k)$ or $b - \rho(u^k)$. The term $x^k - u^k$ can correspond to a Kth combined vector.

*D. Overrelaxation*

Some embodiments can use over-relaxation in determining a truncated vector for the current iteration. For example, embodiments can add over-relaxation with parameter $\alpha \in (0,2)$ as follows:

$$z^{k+1} := (A + \rho I)^{-1}\left(b + \rho(x^k - u^k)\right)$$

$$\hat{z}^{k+1} := \alpha z^{k+1} + (1 - \alpha)x^k$$

$$x^{k+1} := \left(\hat{z}^{k+1} + u^k\right)_+$$

$$u^{k+1} := u^k + \left(\hat{z}^{k+1} - x^{k+1}\right)$$

In some implementations, values of $\alpha$ near 2 (e.g., 1.95) gives enhanced convergence. This over-relaxation parameter accelerates convergence by emphasizing the residual negative part of the solution slightly before it is extracted by truncation. Recall that at convergence, $x$ is equal to $z$ so this has increasingly little effect as convergence progresses.

*E. Initial Estimate of Noise*

In some embodiments, the truncated vector $x$ and the noise vector $u$ are not initially zero. For example, if some information is known about the sample, that information can be used to make an initial guess at the final values for the truncated vector $x$ and the noise vector $u$. If the guess is good, the convergence will occur in fewer iterations and/or be done more efficiently.

The initial guess might be from previous data sets, which might involve using more reference basis functions than the present formulation. Further details of using only certain reference basis functions, e.g., when information is known about the sample, is now discussed in the context of domain restriction.

## IV. DOMAIN RESTRICTION

As mentioned above, the reference basis functions used to determine A and *b* can be selected based on prior knowledge of the sample. This selection would correspond to knowing what range of particles can be expected in the detection. Non-selected reference basis functions (and the corresponding particles) would be identified as likely not existing. The removal of such reference basis functions can reduce the level of noise in the deconvolution.

Embodiments combine knowledge from prior chemical knowledge, ion statistics, and from other solving methods to produce more constrained results while maintaining the convexity of the problem. This knowledge can reduce the space of the possible solution (i.e., by reducing the number of reference basis functions), and thus the more constrained result. Further, the prior knowledge can be used to provide initial values for the truncated vector *x* (or even the estimated vector *z* with some values possibly not satisfying the truncation threshold) and the noise vector *u*.

### A. Formulation Using Mask Function

Given scientific properties of a sample, embodiments can be adapted to give an enhanced answer by restricting the areas in which answers can appear. This amounts to restricting the domain from a more simple nonnegative constraint to non-negativity coupled with a zero-constraint in certain dimensions. Embodiments described above dealt with the nonnegative constraint by projecting onto the positive orthant. This is mathematically justified since the positive orthant is a convex set. In the more restricted set, various other dimensions are set to zero; however, this restriction does not affect the convexity. Thus, the set is still convex and the projection is still mathematically valid. Embodiments are updated by changing the projection to project onto the new, more restrictive set.

In one implementation, the formulation allows any prior knowledge to be utilized to produce either a vector of 0s and 1 s or a bitfield map, which can be bit compared in the truncation operation to constrain the freedoms of the results. The implementation can be performed in a very fast manner by generating a mask vector which adds less than a percent to the total run time. The results from initial tests show elimination of errors, cleaner baselines, and faster convergence.

Using a mask vector M (also called a domain restriction vector), the formulation for a least squares objective function using over-relaxation is provided as:

$$z^{k+1} := (A + \rho I)^{-1}\Big(b + \rho(x^k - u^k)\Big)$$

$$\hat{z}^{k+1} := \alpha z^{k+1} + (1 - \alpha)x^k$$

$$x^{k+1} := M \circ \big(\hat{z}^{k+1} + u^k\big)_+$$

$$u^{k+1} := u^k + \big(\hat{z}^{k+1} - x^{k+1}\big)$$

M is a vector that is either 0 or 1 element by element and performs an element-wise multiplication. The effect is to limit the solution's possible results to be a subset of the full vector (i.e., limit the reference basis functions, and thus the particles, to be considered as corresponding to the data). Note that M enforces certain parts of the vector to be zero, but it does not require any of the value in the possible solution space to be non-zero.

In some embodiments, the mask vector M can be used in determining starting values for the noise vector *u* and for *x*. In one embodiment, to seed the starting vectors, the M vector is modified to create a new vector *M'* that changes from 0 to 1 (and 1 to 0) are smoothed such that a change from 0 to 1 does not occur over one reference basis function, but over several or more. For example, *M'* can be zero, and then a next value (i.e., for basis function for next time step) can increase some, and then further values can increase to 1. The increase can occur over any number of values (e.g., 10). In one embodiment, the transitioning from 1 to 0 is smoothed with a cosine function. Regardless of the smoothing function, the new starting noise vector *u* vector can be given by

$$u = 100b(M' - 1).$$

The starting x vector can also be changed to be $x = bM'$.

Various techniques can be used to address artifacts that may occur when using domain restriction. For example, the solution vector can have a large value at the edge of a boundary that has been restricted out. This large value may correspond to an aggregation of the noise associated with the parameters space (e.g., the masses) that have been restricted out. This large value can be removed (rejected) as not pertaining to a physical result. The domains restricted out can be chosen to be sufficiently far away from any domains where actual particles are expected. In this manner, the artifact at the boundary can be safely removed.

The domain restriction can also involve imposing a maximum value at a particular parameter (e.g., mass) or for a range of parameters. In a sense, the 0 values in M impose zero particles for one or more windows of parameters values.

*B. Refinement*

The procedures above focus on extracting full information from a mass spectral scan, and while this is an important feature, other benefits can be obtained. Another benefit can be increased sensitivity in target compound analysis. As the previous discussion has demonstrated, signal to noise ratios in deconvolution can be a challenge. It has also been demonstrated that reducing the stride has a significant effect. Stride implies some integral decimation of the full dataset, but this is not the only option. If we have prior knowledge of peak position, the solution of the intensities at only those peak positions is a subset of the general deconvolution problem. The same autocorrelation and cross correlation vectors are required, but instead of solving for intensity at all possible shifts, only the known shifts are considered.

The concept of a restricted set of reference basis functions can be employed to utilize a solution vector obtained using a larger solution space (i.e., more reference basis functions). The solution *z* or *x* gives significant resolution enhancement and allows good identification of the positions and relative abundances of the underlying components. However, as a relatively unconstrained problem, a useful interpretation is the number and position of components. Given this information, a subsequent deconvolution using only the known number and positions can extract even more accurate intensity information by a solution of N equations and N unknowns (e.g., as part of the optimizing the objective function), where N is now correct.

Once the restricted set of reference basis function is determined, a new solution vector can be determined in the restricted space. This significant constraint allows the use of ion signal levels too weak to be used for general deconvolution. In some embodiments, the new solution vector can be determined without the use of a noise vector.

This restricted mode operation mode can permit operation of the spectrometer at low resolution and hence higher transmission. Quantification is typically limited by ion flux, so enabling higher flux will permit more sensitive limits of quantification. Also, within the limits of the current apparatus, loop injections with the full deconvolution method allow mass chromatograms with very narrow mass windows. Embodiments can use deconvolution to reduce the effect of chromatographic skew on peak position relative to standard acquisition methods.

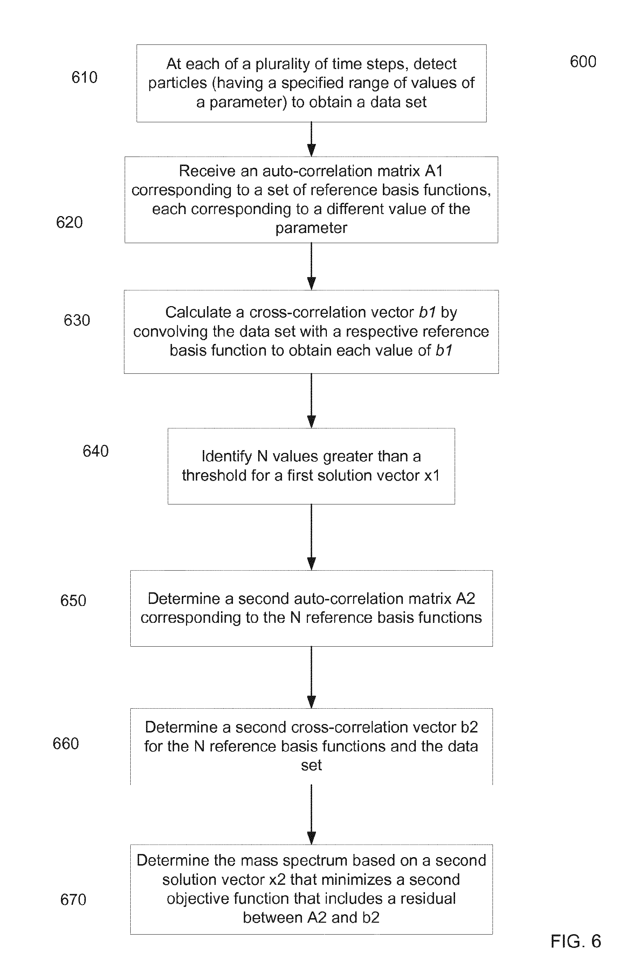

FIG. 6 is a flowchart of a method 600 for determining a spectrum of a sample using solutions in multiple domains according to embodiments of the present invention. Parts of method 600 can be performed in a similar manner as methods 400 and 500. Method 600 may be performed with various formulations of the objective functions, some of which are discussed in more detail below.

At block 610, at each of a plurality of time steps, a spectrometer is operated to detect particles having a specified range of values of a parameter. Block 610 may be performed in a similar manner as block 410.

At block 620, a computer system receives an auto-correlation matrix A1 corresponding to a set of reference basis functions. Block 620 may be performed in a similar manner as block 520. In one embodiment, the set of reference basis functions corresponds to a complete set of reference basis function for the entire spectrum.

At block 630, a computer system calculates a cross-correlation vector *b1* by convolving the data set with each reference basis function to obtain cross-correlation values of *b1*. Block 630 may be performed in a similar manner as block 530.

At block 640, N values that are greater than a threshold for a first solution vector x1 are identified. The first solution vector x1 minimizes a first objective function that includes a residual between A1 and b1. The first solution vector x1 can be determined by various methods described herein, e.g., by embodiments of method 400 or 500 or other methods described herein. In one embodiment, the first solution vector x1 is determined using a technique that is not constrained. Thus, x1 can have negative values. For example, x1 can be determined as $x1 = (A1)^{-1}b1$.

The identified values correspond to N reference basis functions that have a contribution to the data set that is above the threshold. In various examples, the threshold can be zero, a small negative value, or a small positive value.

At block 650, a second auto-correlation matrix A2 corresponding to the N reference basis functions is determined. The second auto-correlation matrix A2 can be determined using values selected from A1. In one implementation, these values can be selected to form a smaller matrix for performing calculations. In another implementation, the selection can be specified by a mask vector that has values of zero and one, e.g., as described above.

At block 660, a second cross-correlation vector b2 for the N reference basis functions and the data set is determined. As with the determination of A2, b2 can be calculated from b1.

At block 670, the mass spectrum is determined based on a second solution vector x2 that minimizes a second objective function that includes a residual between A2 and b2. The domain space for the second solution vector x2 is smaller than for x1. In this manner, reference basis functions corresponding to particles that have been determined to not exist in the data set can be removed. Thus, the underlying solution can be more accurate.

In one embodiment, the second solution vector x2 is determined using a technique that is not constrained. Thus, x2 can have negative values. For example, x2 can be determined as $x2=(A2)^{-1}b2$.

## V. MODIFICATION OF OBJECTIVE FUNCTION

As described above, the objective function can be formulated in various ways. For example, the objective function can be formulated as: an $\ell_1$-norm (absolute value of a residual), $\ell_2$-norm (least squares of a residual), and a Huber function or other function of a residual.

*A. Formation of General Problem*

In some embodiments, the general problem can be formulated as:

$$\text{minimize } \phi(Ax - b)$$

$$\text{subject to } x \geq 0,$$

with variable $x \in \mathbf{R}^m$, where $\phi : R^n \rightarrow \mathbf{R}$ is the objective function (described below), and $A \in \mathbf{R}^{m \times m}$ and $b \in \mathbf{R}^m$ are the problem data. Here $A$ represents a convolution operator, $x$ is a (nonnegative) spectrum to be estimated, and $b$ is the measured response, so this problem is a nonnegative deconvolution problem. In determining a spectrum from spectrometry data, we have $m = n$ (i.e., $A$ is square), $A$ is positive semi-definite, and also circulant, which will be discussed later.

The objective function penalizes deviations (residual) between $Ax$ (what we would expect to measure if $x$ were the spectrum) and $b$ (what we actually measured). We will take it to be separable, of the form:

$$\phi(r) = \sum_{i=1}^{m} \psi(r_i),$$

where $\psi : \mathbf{R} \rightarrow \mathbf{R}$ is given. We will consider three specific cases:

least-squares penalty: $\psi(a) = a^2$
$\ell 1$-norm penalty: $\psi(a) = |a|$, and
Huber penalty function of width $a > 0$:

$$\psi(a) = \begin{cases} a^2 & |a| \leq \alpha \\ 2\alpha |a| - \alpha^2 & |a| > \alpha \end{cases}$$

(See Boyd, Convex Optimization, Cambridge University Press, 2004, for discussion of the Huber function).

*B. Format of General solution*

The problem above is a convex optimization problem, so in principle it can be solved exactly by many methods, such as interior-point methods, subgradient methods, or active-set methods. But such methods can be slow for large systems. Embodiments can exploit the fact that *A* is a convolution operator. We first rewrite the problem as:

$$\text{minimize } \emptyset(y) + I_+(x)$$

$$\text{subject to } y = Ax - b,$$

with variables *x* and *y*. The function I$_+$(x) is the indicator function of $x \geq 0$, which is 0 when $x \geq 0$, and $+\infty$ otherwise. Such a formulation outlines the desired solution.

This problem can be solved as a constrained convex optimization problem. In the implementation below, we introduce (scaled) dual variables *(u, v)* that relate to noise. In certain implementations, only a single variable *u* remains, depending on the formulation. Similarly, the estimated vector can be represented as a dual variable *(z, w)* for certain formulations. Over-relaxation with parameter $\alpha$ (0, 2) is implemented below, but other implementations do not use over-relaxation.

In one embodiment, a method can include:

$$(x^{k+1}, y^{k+1}) := \underset{x, y}{\text{argmin}} \left( \emptyset(y) + I_+(x) + (\rho/2) \left\| x - z^k + u^k \right\|_2^2 + (\rho/2) \| y - w^k + v^k \|_2^2 \right)$$

$$(\hat{x}^{k+1}, \hat{y}^{k+1}) := \alpha(x^{k+1}, y^{k+1}) + (1 - \alpha)(z^k, w^k)$$

$$(z^{k+1}, w^{k+1}) := \Pi(\hat{x}^{k+1} + u^k, \hat{y}^{k+1} + v^k)$$

$$(u^{k+1}, v^{k+1}) := (u^k + \hat{x}^{k+1} - z^{k+1}, v^k + \hat{y}^{k+1} - w^{k+1})$$

Here $\Pi$ is projection onto the set [(*x, y*) |*y = Ax - b*}.

The first step can be solved separately for x and y:

$$x^{k+1} := (z^k - u^k)_+$$

$$y^{k+1} := S(w^k - v^k)$$

where S is the proximal operator of $\phi$. Since $\phi$ is separable, so is *S*; it simply applies the proximal operator of $\psi$ to each entry of the vector.

The proximal operators for our three specific penalty functions are as follows. We start with the simplest one, least-squares penalty, with $\psi(a) = a^2$. In this case the proximal operator is simple scaling (linear shrinkage):

$$S(a) = a/(1 + 2/\rho),$$

where $\rho$ is an algorithm parameter. When $\psi(a)$ is the absolute value function (|*a*|), which corresponds to $\phi = \|\cdot\|_1$ (the $\ell_1$-norm), the proximal operator is the soft threshold function:

$$S(a) = \max(a - 1/\rho, 0) - \min(a + 1/\rho, 0)$$

For ψ the Huber function, the proximal operator has the form

$$S(a) = \begin{cases} a/(1 + 2/\rho) & |a| \leq \alpha(1 + 2/\rho) \\ a - 2\alpha/p & a \geq \alpha(1 + 2/\rho) \\ a + 2\alpha/p & a \leq -\alpha(1 + 2/\rho) \end{cases}$$

The Huber function can act like a $\ell_2$-norm penalty within a given window and then like a $\ell_1$-norm penalty outside the window. For example, the Huber function can use $\ell_2$-norm for small errors and $\ell_1$-norm for big errors. For more on proximal operators, see N. Parikh and S. Boyd, Proximal Algorithms, Foundations and Trends in Optimization, 1(3):123-231, 2013. Example values of ρ are 0.005 for $\ell_1$-norm and Huber implementation (or 1 to 0.00001) and 0.00005 for $\ell_2$-norm.

The projection Π can be worked out analytically, and can be expressed as

$$\tilde{x} := \hat{x}^{k+1} + u^k$$

$$\tilde{y} := \hat{y}^{k+1} + v^k$$

$$r := A\tilde{x} - b - \tilde{y}$$

$$z^{k+1} := \tilde{x} - A^T(I + AA^T)^{-1}r$$

$$w^{k+1} := \tilde{y} + (I + AA^T)^{-1}r.$$

In one implementation, the method can be computed as:

$$x^{k+1} := (z^k - u^k) + \tag{1}$$

$$y^{k+1} := S(w^k - v^k) \tag{2}$$

$$\hat{x}^{k+1} := \alpha x^{k+1} + (1 - \alpha)z^k \tag{3}$$

$$\hat{y}^{k+1} := \alpha y^{k+1} + (1 - \alpha)w^k \tag{4}$$

$$\tilde{x}^{k+1} := \hat{x}^{k+1} + u^k \tag{5}$$

$$\tilde{y}^{k+1} := \hat{y}^{k+1} + v^k \tag{6}$$

$$r^{k+1} := A\tilde{x}^{k+1} - \tilde{y}^{k+1} - b \tag{7}$$

$$z^{k+1} := \tilde{x}^{k+1} - A^T(I + AA^t)^{-1}r^{k+1} \tag{8}$$

$$w^{k+1} := \tilde{y}^{k+1} + (I + AA^T)^{-1} r^{k+1} \tag{9}$$

$$u^{k+1} := u^k + \hat{x}^{k+1} - z^{k+1} \tag{10}$$

$$v^{k+1} := v^k + \hat{y}^{k+1} - w^{k+1} \tag{11}$$

The different formulations based on the type of proximal operator are reflected in step (2), where $y$ is determined. The values of vector $y$ guide $x$ and $z$ to converge to each other. The values for $y$ and $w$ push the solution towards convergence to the non-negative solution. In step (7), the values of $y$ are used with $x$ to determine $r$, which is used in determining the estimated vector(s) $z$ and $w$ (just $z$ if $\ell_2$-norm is used). Thus, this formulation for a least squares proximal operator is equivalent to the over-relaxed formulation for least squares as provided in section III(D).

The steps above can be computed in various ways and in various orders. For example, several of steps can be done in parallel. In one implementation, steps (1) and (2); steps (3) and (4); steps (5) and (6); steps (8) and (9); and step (10) and (11) can respectively be done in parallel. Many of the steps are very simple operations involving vector addition, or applying simple nonlinear functions to a vector element-wise. Steps (7)-(9) can be re-arranged in many ways and involve multiplication by matrices that involve $A$.

*C. Generalized Domain*

The above method can be modified based on domain restriction, as described above. Such a modification can utilize a mask function in step (1) to set certain values of x (e.g., set certain values to zero to restrict the solution space). The truncation operation can be viewed as setting a minimum value for a particular dimension (reference basis function) for x, e.g., zero. Further, the above method can be modified to specify a maximum values for a particular dimension, which can correspond to a maximum number of particles for the parameter value (e.g., mass) corresponding to the given reference basis function. And, a total number of particles can be constrained by constraining a sum of the value of vector $x$.

Thus, embodiments can consider a more general domain for $x$. In the basic problem above, $x$ is constrained to be elementwise nonnegative. In the generalization, we replace the constraint $x \geq 0$ with $x \in D$, where $D$ is a more general domain set. One interesting example is imposing an upper bound on each element of $x$:

$$\mathcal{D} = \{x \mid 0 \leq x_i \leq u_i\},$$

where $u_i$ are given upper bounds (with $u_i = 0$ meaning we must have $x_i = 0$). Another one sets an upper bound on the total of $x$ over nonoverlapping regions:

$$\mathcal{D} = \{x \mid x \geq 0, \sum_{i \in R_k} x_i \leq \mu_k\}.$$

Here $R_k$ are non-overlappiong regions of the index $i$. As an example, we might know that the sum of $x_i$ from $i = 123$ to $i = 345$ does not exceed 35.6, e.g., if a total mass in some range is known in the sample.

The *only* change needed for the more generalized domain is to replace step 1, $x^{k+1} = (z^k - u_k)+$, with $x^{k+1} = \Pi_D(z^k - u_k)+$ where $\Pi_D$ is the projection onto $D$. When $D$ represents lower and upper bounds on $x$, embodiments can simply truncate all values outside the range. When $D$ specifies a limit on a sum of entries of $x$, embodiments can subtract a constant from each entry in the range to bring the sum down to the limit. $D$ can also be used to implement the mask function for domain restriction. *A priori* and data dependent information can also be incorporated, such as ion statistics, possible mass and charge lists, and improved convergence speed.

**VI. IMPLEMENTATION**

Various techniques can be used to perform methods more efficiently. For example, an inverse of A or (A+$\rho$I) can be computed more efficiently when A is a circulant matrix, which can be diagonalized using periodic basis function (e.g., Fourier transforms).

*A. Circulant*

As written, the above embodiments works well, but the solution involves the inverse of a potentially large matrix A that can be obtained by any number of methods such as Toeplitz or LU or Cholesky decomposition. Although relatively fast, for our large application, these approaches are too slow to keep up with real time data acquisition so we need a faster algorithm. It can also involve a massive memory space to simply contain the working elements. The identification that the matrix A is a banded positive definite Hermetian matrix that can be approximated as a circulant matrix to allow for more efficient methods.

In one embodiment, the matrix A is taken to be a circulant matrix. A circulant matrix is a special kind of Toeplitz matrix, where each row vector is rotated one element to the right relative to the preceding row vector. The periodic nature of A can be exploited using periodic functions, such as Fourier functions (e.g., sines, cosines, and $e^{iwt}$). A can be decomposed into the periodic basis functions to diagonalize A, and then easily determine an inverse. Accordingly, an inverse of a circulant matrix can be computed efficiently. The discussion below uses Fourier functions, but other suitable periodic functions can be used. Any suitable discrete Fourier transform can be used, e.g., any fast Fourier transform (FFT) algorithm. FFTs having optimized routines can be used.

When reference basis functions for all time steps are used (e.g., the solution space is large), then A is circulant. If a reduced A is used (e.g., where only select reference basis functions are used), then A might not be a circulant matrix. Implementations can use a mask function to effectively reduce the space while still using the full A matrix.

Using the fact that *A* is symmetric and circulant, A can be written as $A = Q^T \Lambda Q$, where $Q \in \mathbf{R}^{m \times n}$ is the discrete Fourier transform matrix, and $\Lambda$, is the diagonal matrix of the eigenvalues of *A* (which are nonnegative). The discrete Fourier transform can be done at a resolution that matches the size of A. We can implement multiplication by $Q$ as an FFT, and multiplication by $q^T$ as an inverse FFT, which can be carried out in order $n \log_2 n$ operations. As an example, equation (9) from above can be re-written as:

$$w^{k+1} := \tilde{y} + Q^T \tilde{\Lambda} Q r,$$

where $\tilde{\Lambda}_{ii}$ is the diagonal matrix with $\tilde{\Lambda}_{ii} = \Lambda_{ii}/(1 + \Lambda_{ii}^2)$. Using this technique, the steps (7)-(9) can be carried out in order $n \log_2 n$ operations. Further, using this Eigen-decomposition and notation, $(A + \rho I)^{-1} = Q^T(\rho I + \Lambda)Q$.

$\Lambda$ (the diagonal matrix of the eigenvalues of *A*) is invariant throughout the algorithm and may therefore be computed only once during setup. Thus, the eigenvalues of each matrix, A and $(I + A^T A)^{-1}$, can be cached. Since A is symmetric, one does not need $A^T$, as $Ax = A^T x$. When it is needed to multiply a vector by either of these matrices, embodiments can take them into Fourier space, multiply them by the cached vector, and then take the inverse transform. An advantage is that a huge square A matrix does not need to be created or stored or transferred. Each reference function has its own eigenvalue. Embodiments can interpolate between reference functions to estimate the eigenvalues of reference basis functions not acquired via calibration, and therefore these interpolations create their own unique eigenvalues.

The product of a circulant matrix with a vector can be written as the convolution between two vectors. The convolution can be computed as a product of two Fourier transforms. Thus, embodiments can solve for the inverse with an FFT, and perform the deconvolution by dividing the FFT of the cross correlation vector by the FFT of the autocorrelation vector and taking the inverse FFT of the result. In one embodiment using $l_2$-norm and no offset (e.g., $\rho I$ term), the initial determination of z (i.e., when noise vector is zero) can be computed as:

$$z := iFFT\left[\frac{FFT(b)}{\Lambda}\right]$$

The result can be scaled by the inverse of the size of the FFT. As another example, the eigenvalues $\Lambda$ can include an offset term. Additional terms can be added to b for later iterations, e.g. a noise vector and a truncated vector multiplied by the offset, as is provided herein.

Embodiments can make a matrix A circulant by padding A with zeros to span an additional range equal to the dimension of the non-zero band of the original matrix A and then by adding the missing elements to the corners of matrix *A* where there is no data or solution. The first row of matrix *A* can then be represented by a vector a that is the autocorrelation of the reference dataset. In such an embodiment, $\Lambda$ can be determined as the magnitude of the FFT of said padded vector a with p added to each element to represent $(A + \rho I)^{-1}$.

$$\Lambda = magnitude(fft(a)) + \rho$$

This term can be pre-computed, and can stay constant during the calculation, as long as $\rho$ stays constant. A physical interpretation of the $\rho I$ term in Fourier space is the addition of a small amount of white noise as an offset (e.g., to provide stability in the iterative procedure and to avoid division by zero). Iterative steps can accumulate this into the solution vector $u$.

*B. Chunking*

In some embodiments, the problem can be broken up into smaller chunks. Solutions for the smaller chunks can be combined to provide a final solution vector. This can restrict the maximum dimension of any sub-problem and reduce the numerical operations for any sub-problem, and allow parallelization. Since the working chunks are smaller than the entire A and b, the computational complexity is reduced because the FFTs are N log N. Thus, when solving only for a chunk, the value of N is reduced. This may be helpful for longer scans, and especially ones where the relevant reference peak shape may change across the mass range. The reference functions can slightly change over a mass range. By chunking, small tweaks can be made to the reference functions used for a given chunk while still approximating a circulant solution.

The chunks (also called smaller chunks or non-overlapping segments) can be chosen to not overlap. But, in such situations, a padded chunk of a larger size can be used (e.g., padded with zeros or real data) to provide greater accuracy. For example, a chunk of M basis functions can be selected (which does not overlap with other chunks) can represent the middle part of a larger, padded chunk. The padded chunk overlaps with other padded chunks (overlapping segments) and other smaller chunks. A solution vector can be determined for the larger, padded chunk, but only the values for the smaller chunk (e.g., the middle part of the padded chunk) is used to determining the final solution vector the entire problem, e.g., the full $x$. Thus, a smaller solution vector $x$ can be determined for each padded chunk (e.g., using methods described herein), and selected non-overlapping parts of the smaller solution vector can be appended to each other to obtain the full $x$.

To determine the size of each chunk, the width of a reference function (in time) can be used as an initial guide, with a few times the width of the reference function being used. Additionally, data regions where the actual signals go to zero (i.e., no particles) can be identified to minimize edge problems. Thus, chunks can be separated at points where little data is received.

The size of a padded chunk can be determined in various ways. The padded chunk can be chosen as three times the reference function's width, where the middle third (smaller chunk) of the solution vector is used in assembling the final solution vector the entire problem. The values for the smaller chunks (e.g., middle thirds of each padded chunk) can be simply combined (e.g., appended to each other) as the smaller chunks do not overlap.

In one implementation, chunking involves cutting the cross correlation vector $b$ into chunks, and then each chunk of $b$ can have zeros padded to the ends or the corresponding real data. For example, if a chunk is M values long (e.g., 10,000 values selected between 230,000 and 240,000), then M zero can be padded before and after the chunk so that the total amount is 3M. This padded chunk of $b$ can then be used with the appropriate part of A to obtain a solution vector for the original segment of M values. The M values before and after the original chunk can be thrown away. The M values of the solution vectors can then be combined into the final solution vector, e.g., by simply using the middle M values for each padded chunk of 3M values. The middle M values do not overlap and thus the values can simply be appended.

In another implementation, chunking involves breaking the raw data into chunks. As described above, raw data can be obtained for each of a plurality of time steps. Thus, the raw data can be broken up by different time ranges. The time ranges can be padded time ranges (i.e., overlapping), where the time steps in the middle correspond to the chunk to be used in creating the solution vector. Each padded time range i (a type of padded chunk) of raw data can be used to create a respective cross-correlation vector $b_i$. The respective cross-correlation vectors can then be used in separate optimization procedures to get a solution vector corresponding to the padded time-range chunk of raw data. The solution vector corresponding to the time steps of the chunk (e.g., middle part of padded time-range chunk) can then be combined with solutions for other chunks.

In one embodiment, the edges of the chunks can be adjusted by looking at intermediate solutions from surrounding chunks. For example, some number of iterations can be performed for neighboring chunks. Non-zero values can be identified in the intermediate result of a neighboring chunk. Wherever the neighbor intermediate solution (i.e., neighbor to a first chunk) has a non-zero value, a corresponding scaled partial auto-correlation is subtracted off of the $b$ vector for the padded part of the first chunk (i.e., the part of a padded chunk that overlaps with the solution part of a next chunk, not a middle region). The corresponding value would align with a partial peak being present in the data at the edge of the first chunk. Accordingly, in one implementation, a correction to the padded part (e.g., outer third) of a first padded chunk uses a result from the neighboring padded chunk's central region convolved with the first padded chunk's auto-correlation to subtract off the correct shape.

The process can repeat solving some number of iterations for a chunk and looking at neighboring answers to update the $b$ vector. The solution vector and all other intermediate results can be, but does not have to be, retained while adjusting the edge of the chunk. The neighbors have the solution to the first (present) chunk's edge location and therefore have the entire signal to deconvolve instead of a partial peak. Thus, the neighbor has a more accurate answer for the present chunk's edge.

Another option to improve the edges of chunks involves looking at the total intensity of signal where the edge of chunking is made. Then, a super-position can be created of all possible combinations of partial peaks that are then added to the edge of the peak with the proper scaling for the cutoff.

Accordingly, the auto-correlation matrix A, the cross correlation vector b, and the final vector obtained in any of methods 400, 500, and 600 can correspond to a portion of a larger set of reference basis functions. That is, they can correspond to a chunk or padded chunk. Final vectors can be obtained for a plurality of chunks or padded chunks, which collectively correspond to a larger set of reference basis functions. The final vector and the other final vectors can be combined to obtain a full final vector corresponding to the larger set of reference basis functions. The spectrum can then be determined based on the final vector and the other final vectors. When the final vector and the other final vectors correspond to padded chunks, they will overlap (e.g., one padded chunk can overlap with two other padded chunks, one on each side). In this case, the smaller non-overlapping chunks of the final vectors can be selected and appending to each other to obtain the full final vector.

*C. Zeroing (padding)*

The number of reference basis functions would typically be much larger than the number of time steps for which a reference basis function has non-zero values. For example, 100,000 time steps might be performed in a scan, where the settings have a reference basis function be non-zero for 1,000 consecutive time steps. The number of reference basis functions would be 100,100. Many of these reference basis function are far enough away in time that the auto-correlation matrix element would be zero. Thus, the auto-correlation matrix would be a banded matrix. The matrix elements between reference basis functions that are known to have sufficient separation can be set to zero.

Certain cross-correlation values can also be set to zero, e.g., when the cross-correlation values are less than a cutoff value, or it is known that the sample does not have particles corresponding to those cross-correlation values. Zeros can also be added when chunking is done.

Padding with zeros can also be done when setting up an FFT. The FFT can be setup to work with powers of 2. Extra zeros can be added to a vector (e.g., added to the cross-correlation vector b), and then the FFT can be taken, and an inverse FFT (IFFT) can be performed, where only the original variables (i.e., before padding) are used.

## VII. RESULTS

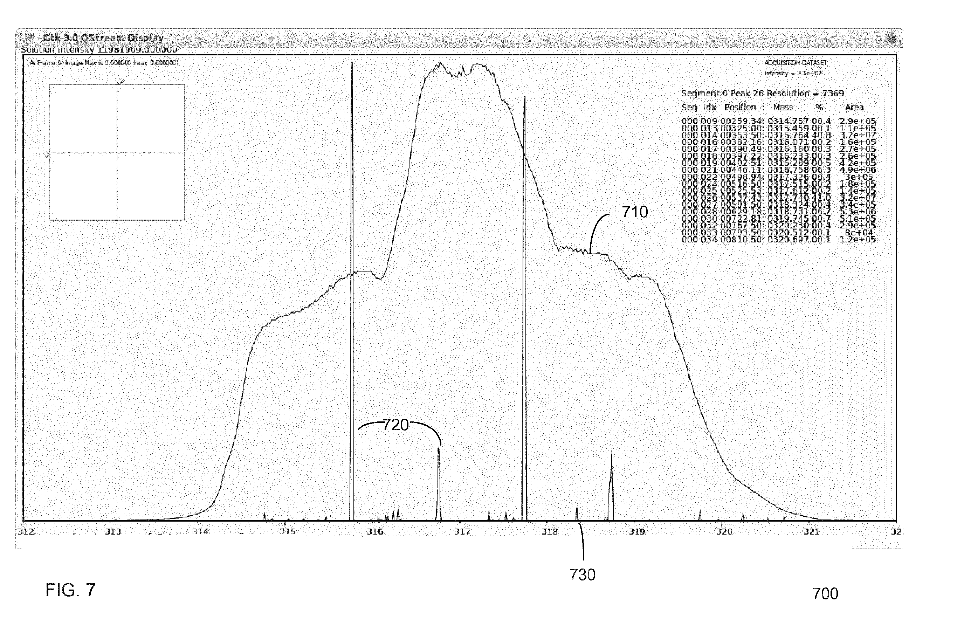

FIG. 7 shows a plot 700 of a raw data set and a mass spectrum determined according to embodiments of the present invention. The horizontal axis corresponds to mass and the vertical axis corresponds to abundance of particles at a given mass. The raw data set 710 shows that particles in a wide range of about 313 to 322 are detected, but there is not much resolution of exactly what masses the particles actually are.

The mass spectrum 720 shows results after 37 iterations of the $\ell_2$ -norm solver. As is readily seen, certain peaks have been resolved. However, there are some small peaks 730 that do not correspond to physical particles that were detected. Typically, between about 20 to 30 iterations are used, but up to several thousand iterations or more may be used depending upon the starting data and how much time is available. About 80 to 250 iterations may be used to ensure statistical convergence.

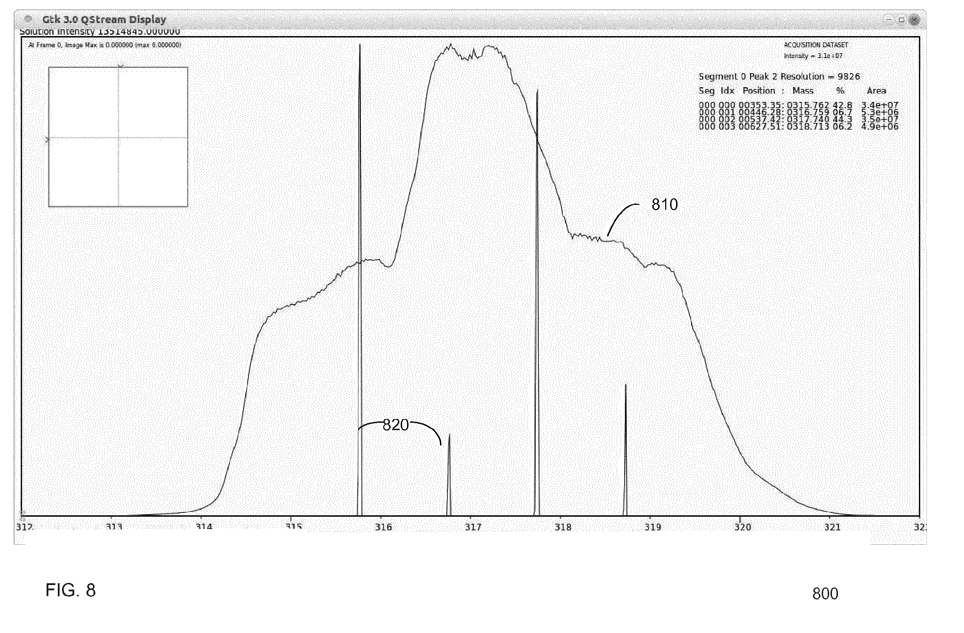

FIG. 8 shows a plot 800 of a raw data set and a mass spectrum determined using a mask vector and seed values according to embodiments of the present invention. The raw data set 810 is the same as raw data set 710 from plot 700. The mass spectrum 820 shows results after 37 iterations of the $\ell_2$-norm solver using a mask vector and an initial seed. As can be readily seen, the small non-physical peaks do not appear. Instead, only the four prominent peaks corresponding to physical particles remain.

The mask vector was generated based upon a likelihood probability using the shape of the reference function and Poisson statistics. The likelihood was targeting to resolve at least 100 ions of any mass to be shown. The seed values were then generated from formulas as described herein, where the mask is smoothed with a 25 time step wide half cosine function on the edges to form an *M'* vector that then produced a seed u and *x* vector.

## VIII. OTHER APPLICATIONS

Other kinds of spectrometry, such as ultrasound, can be used. Other examples include analyzing chromatographic signals, or signals from any substance or object where the instrument's impulse response is invariant with respect to that parameter, such as photons or sound waves scattered from an object or ions extracted from a substance. Thus, the spectrum can be a mass spectrum (e.g., of molecules of the sample), a frequency spectrum of electromagnetic radiation (photons) reflected or emitted from a sample (e.g., emitted after photons are absorbed by the sample), a spectrum obtained from sound waves reflected from the sample (which could be an object or multiple objects), and the like.

In the other kinds of spectrometry, the device scans over regular values in time. In embodiments that use circulant techniques, the process can be controlled to provide data signals having reproducible dispersion in time.

## IX. COMPUTER SYSTEM

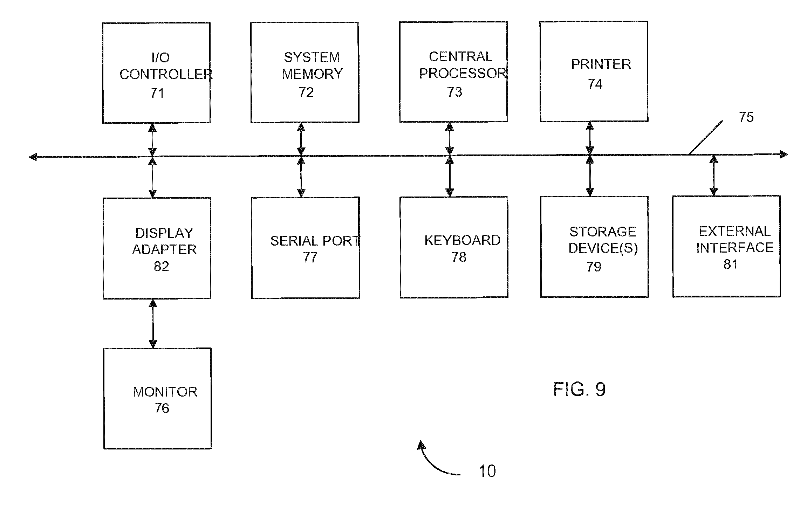

Any of the computer systems mentioned herein may utilize any suitable number of subsystems. Examples of such subsystems are shown in FIG. 9 in computer apparatus 10. In some embodiments, a computer system includes a single computer apparatus, where the subsystems can be the components of the computer apparatus. In other embodiments, a computer system can include multiple computer apparatuses, each being a subsystem, with internal components.

The subsystems shown in FIG. 9 are interconnected via a system bus 75. Additional subsystems such as a printer 74, keyboard 78, storage device(s) 79, monitor 76, which is coupled to display adapter 82, and others are shown. Peripherals and input/output (I/O) devices, which couple to I/O controller 71, can be connected to the computer system by any number of means known in the art, such as serial port 77. For example, serial port 77 or external interface 81 (e.g. Ethernet, Wi-Fi, etc.) can be used to connect computer system 10 to a wide area network such as the Internet, a mouse input device, or a scanner. The interconnection via system bus 75 allows the central processor 73 to communicate with each subsystem and to control the execution of instructions from system memory 72 or the storage device(s) 79 (e.g., a fixed disk, such as a hard drive or optical disk), as well as the exchange of information between subsystems. The system memory 72 and/or the storage device(s) 79 may embody a computer readable medium. Any of the data mentioned herein can be output from one component to another component and can be output to the user.

In one embodiment, one or more graphics processors (GPUs) can be used as central processor 73 or in addition to a separate central processor 73. The GPUs can be used to perform any of the methods described herein. GPUs can provide >1 TFlop/s compute performance for real time processing. GPUs can help to allow the auto and cross correlation to be performed in real time with latencies in single digit millisecond range. A custom GPU kernel can be written and optimized for methods described herein.

A computer system can include a plurality of the same components or subsystems, e.g., connected together by external interface 81 or by an internal interface. In some embodiments, computer systems, subsystem, or apparatuses can communicate over a network. In such instances, one computer can be considered a client and another computer a server, where each can be part of a same computer system. A client and a server can each include multiple systems, subsystems, or components.

It should be understood that any of the embodiments of the present invention can be implemented in the form of control logic using hardware (e.g. an application specific integrated circuit or field programmable gate array) and/or using computer software with a generally programmable processor in a modular or integrated manner. As used herein, a processor includes a multi-core processor on a same integrated chip, or multiple processing units on a single circuit board or networked. Based on the disclosure and teachings provided herein, a person of ordinary skill in the art will know and appreciate other ways and/or methods to implement embodiments of the present invention using hardware and a combination of hardware and software.

Any of the software components or functions described in this application may be implemented as software code to be executed by a processor using any suitable computer language such as, for example, Java, C, C++, C# or scripting language such as Perl or Python using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g. a hard drive, a CD, or an entire computer system), and may be present on or within different computer products within a system or network. A computer system may include a monitor, printer, or other suitable display for providing any of the results mentioned herein to a user.

Any of the methods described herein may be totally or partially performed with a computer system including one or more processors, which can be configured to perform the steps. Thus, embodiments can be directed to computer systems configured to perform the steps of any of the methods described herein, potentially with different components performing a respective steps or a respective group of steps. Although presented as numbered steps, steps of methods herein can be performed at a same time or in a different order. Additionally, portions of these steps may be used with portions of other steps from other methods. Also, all or portions of a step may be optional. Additionally, any of the steps of any of the methods can be performed with modules, circuits, or other means for performing these steps.

The specific details of particular embodiments may be combined in any suitable manner without departing from the spirit and scope of embodiments of the invention. However, other embodiments of the invention may be directed to specific embodiments relating to each individual aspect, or specific combinations of these individual aspects.

The above description of exemplary embodiments of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications to thereby enable others skilled in the art to best utilize the invention in various embodiments and with various modifications as are suited to the particular use contemplated.

A recitation of "a", "an" or "the" is intended to mean "one or more" unless specifically indicated to the contrary.

All patents, patent applications, publications, and descriptions mentioned here are incorporated by reference in their entirety for all purposes. None is admitted to be prior art.

**Claims**

1. A method of determining a spectrum of a sample, the method comprising:

at each of a plurality of time steps:

operating a spectrometer to detect particles having a specified range of values of a parameter, the detecting obtaining a measurement corresponding to a number of particles detected during the time step, thereby obtaining a data set;
receiving, at a computer system, an auto-correlation matrix A corresponding to a set of reference basis functions, each corresponding to a different value of the parameter;
calculating, by a computer system, a cross-correlation vector $b$ by:

for each reference basis function:

convolving the data set with the reference basis function to obtain a cross-correlation value;

performing, by the computer system, for each of a plurality of iterations:

determining a Kth estimated vector by minimizing a Kth objective function, the Kth objective function including a residual between the cross-correlation vector $b$ and a (K-1)th estimated vector multiplied by the auto-correlation matrix A;

performing a truncation operation using the Kth estimated vector to obtain a Kth truncated vector that is constrained to have values equal to or greater than a truncation threshold;
accumulating a Kth noise vector that includes a (K-1)th noise vector and that includes a difference between the Kth estimated vector and the Kth truncated vector; and
using the Kth noise vector to determine a (K+1)th objective function for the (K+1)th iteration; and
determining the spectrum based on a final vector, the final vector being a truncated vector or an estimated vector after the K iterations.

2. The method of claim 1, wherein the detecting also obtains a location of particles in at least one dimension.

3. The method of claim 2, wherein the detector detects locations of particles in a two-dimensional plane.

**4.** The method of claim 3, wherein the detector detects a phase of the particles to obtain a three-dimensional location of the particles.

**5.** The method of claim 2, wherein the spectrometer is a mass spectrometer, and wherein the particles are ions species from the sample, and wherein operating the mass spectrometer includes:

> passing ion species having a range of mass-to-charge ratios during a time step; and
> detecting the ion species on a detector that determines the location of a detected ion species in the at least one dimension.

**6.** The method of any of claims 1-3, wherein the objective function is formulated using least-squares, and wherein determining the (K+1)th objective function includes:

> obtaining an inverse using the auto-correlation matrix;
> calculating a Kth corrected vector by combining the cross-correlation vector b and the Kth noise vector, and wherein determining the (K+1)th estimated vector by minimizing the (K+1)th objective function includes:
>
>> determining a K+1th estimated vector based on a multiplication of the inverse and the Kth corrected vector.

**7.** The method of claim 6, wherein the inverse is of the auto-correlation matrix and a scaling factor at diagonal matrix elements, and wherein determining the (K+1)th objective function further includes:

> determining a Kth combined vector using the Kth truncated vector and the Kth noise vector; and
> calculating the Kth corrected vector by summing the cross-correlation vector b and the scaling factor multiplying the Kth correction vector

**8.** The method of claim 7, further comprising:

> calculating, by the computer system, the inverse of the auto-correlation matrix and the scaling factor at the diagonal matrix elements.

**9.** The method of claim 6, wherein the scaling factor is zero.

**10.** The method of any of the preceding claims, wherein determining a spectrum based on a final vector includes:

> using the final vector to determine N reference basis functions that have above a cutoff contribution to the data set; and
> using values of the final vector corresponding to the N reference basis function to determine an abundance of particles corresponding to the N reference basis functions.

**10.** The method of any of the preceding claims, further comprising:

> setting a seed value for a noise vector in a first objective function, wherein the seed value corresponds to an estimate of noise in the data set.

**12.** The method of any of the preceding claims, further comprising:

> calculating, by the computer system, an inverse of the auto-correlation matrix A; and
> using the inverse in minimizing the Kth objective function.

**11.** The method of claim 12, wherein calculating the inverse includes:

> transforming the auto-correlation matrix A using orthogonal periodic basis functions to obtain a diagonal matrix; and
> computing an inverse of the diagonal matrix.

**12.** The method of claim 13, wherein the transforming uses a discrete Fourier transform.

**15.** The method of any of the preceding claims, further comprising:

calculating the auto-correlation matrix by taking an integral over any spatial dimensions and over the time steps for each combination of two reference basis functions.

**13.** The method of claim 15, wherein the reference basis functions are defined as a set of data points, the method further comprising:

receiving subset of reference basis function that is smaller than the set of reference basis functions;
generating the set of reference basis functions from the subset of reference basis functions.

**17.** The method of any of the preceding claims, further comprising:

receiving a selection of the set of reference basis functions from among a larger set of reference basis functions.

**18.** The method of claim **Error! Reference source not found.,** wherein the selection is specified by a mask vector that has values of zero and one, wherein the mask vector is used in the truncation process.

**19.** The method of any of the preceding claims, wherein the truncation process constrains a maximum value for one or more values of the Kth truncated vector.

**20.** The method of claim 19, wherein the truncation process constrains a total sum of the values of the Kth truncated vector.

**21.** The method of any of the preceding claims, wherein the auto-correlation matrix A, the cross-correlation vector $b$, and the final vector correspond to a portion of a larger set of reference basis functions, the method further comprising:

calculating other final vectors for other portions of the larger set of reference basis functions;
combining the final vector and the other final vectors to obtain a full final vector corresponding to the larger set of reference basis functions; and
determining the spectrum based on the final vector and the other final vectors.

**22.** The method of claim 21, wherein the other final vectors are determined using respective cross-correlation vectors, wherein each cross-correlation vector is determined by:

selecting a chunk of the data set, the chunk corresponding to a range of time steps;
using the chunk of the data set to determine the respective cross-correlation vector.

**23.** A mass spectrometer, comprising a computer programmed with instructions for carrying out the method of claim 1.

FIG. 1A

FIG. 1B

FIG. 1

FIG. 2

FIG. 3

410 | At each of a plurality of time steps, detect particles (having a specified range of values of a parameter) to obtain a data set

400

420 | Receive an auto-correlation matrix A corresponding to a set of reference basis functions, each corresponding to a different value of the parameter

430 | Calculate a cross-correlation vector $b$ by convolving the data set with a respective reference basis function to obtain each value of $b$

440 | Estimate a noise vector $u$ that corresponds to noise in the data set

450 | Calculate a solution vector $x$ that solves $Ax=b-u$

460 | Use the solution vector X to determine the spectrum

FIG. 4

500

510 At each of a plurality of time steps, detect particles (having a specified range of values of a parameter) to obtain a data set

520 Receive an auto-correlation matrix A corresponding to a set of reference basis functions, each corresponding to a different value of the parameter

530 Calculate a cross-correlation vector $b$ by convolving the data set with a respective reference basis function to obtain each value of $b$

540 Determine a Kth estimated vector by minimizing a Kth objective function including a residual between the cross-correlation vector $b$ and a (K-1)th estimated vector multiplied by the auto-correlation matrix A

For each of K iteriations

550 Perform a truncation operation using the Kth estimated vector to obtain a Kth truncated vector that is constrained to have values equal to or greater than a truncation threshold

560 Accumulate a Kth noise vector that includes a (K-1)th noise vector and that includes a difference between the Kth estimated vector and the Kth truncated vector

570 Use the Kth noise vector to determine a (K+1)th objective function for the (K+1)th iteration

580 Determine the spectrum based on a final vector being a truncated vector or an estimated vector after the K iterations

FIG. 5

610 At each of a plurality of time steps, detect particles (having a specified range of values of a parameter) to obtain a data set

600

620 Receive an auto-correlation matrix A1 corresponding to a set of reference basis functions, each corresponding to a different value of the parameter

630 Calculate a cross-correlation vector $b1$ by convolving the data set with a respective reference basis function to obtain each value of $b1$

640 Identify N values greater than a threshold for a first solution vector x1

650 Determine a second auto-correlation matrix A2 corresponding to the N reference basis functions

660 Determine a second cross-correlation vector b2 for the N reference basis functions and the data set

670 Determine the mass spectrum based on a second solution vector x2 that minimizes a second objective function that includes a residual between A2 and b2

FIG. 6

FIG. 7

700

FIG. 8

800

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8389929 B

**Non-patent literature cited in the description**

- **BOYD.** Convex Optimization. Cambridge University Press, 2004

- **N. PARIKH ; S. BOYD.** *Proximal Algorithms, Foundations and Trends in Optimization,* 2013, vol. 1 (3), 123-231